(19) Europäisches Patentamt
European Patent Office
Office européen des brevets

(11) EP 2 521 356 A1

(12) EUROPEAN PATENT APPLICATION
published in accordance with Art. 153(4) EPC

(43) Date of publication:
**07.11.2012 Bulletin 2012/45**

(21) Application number: **10840893.1**

(22) Date of filing: **17.12.2010**

(51) Int Cl.:
***H04N 7/26*** ***(2006.01)***

(86) International application number:
**PCT/JP2010/072736**

(87) International publication number:
**WO 2011/081035 (07.07.2011 Gazette 2011/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2009 JP 2009296949**

(71) Applicant: **Sony Corporation**
**Tokyo 108-0075 (JP)**

(72) Inventor: **SATO Kazushi**
**Tokyo 108-0075 (JP)**

(74) Representative: **Beder, Jens**
**Mitscherlich & Partner**
**Patent-und Rechtsanwälte**
**Sonnenstraße 33**
**80331 München (DE)**

# (54) IMAGE PROCESSING DEVICE AND METHOD, AND PROGRAM

(57) The present invention relates to an image processing device and method and a program that can perform encoding and decoding with high encoding efficiency more efficiently.

A pixel sorter 151 performs class sorting of the respective pixel values of a decoded image before filter processing, supplied from an arithmetic section 110. A filter coefficient calculator 112 calculates a filter coefficient about each of the classes of the sorted pixel values. A strong deblocking filter 152, a weak deblocking filter 153, and an adaptive filter 154 each perform their own filter processing for the pixel values supplied from the arithmetic section 110 by using the filter coefficient supplied from the filter coefficient calculator 112. The present invention can be applied to an image processing device for example.

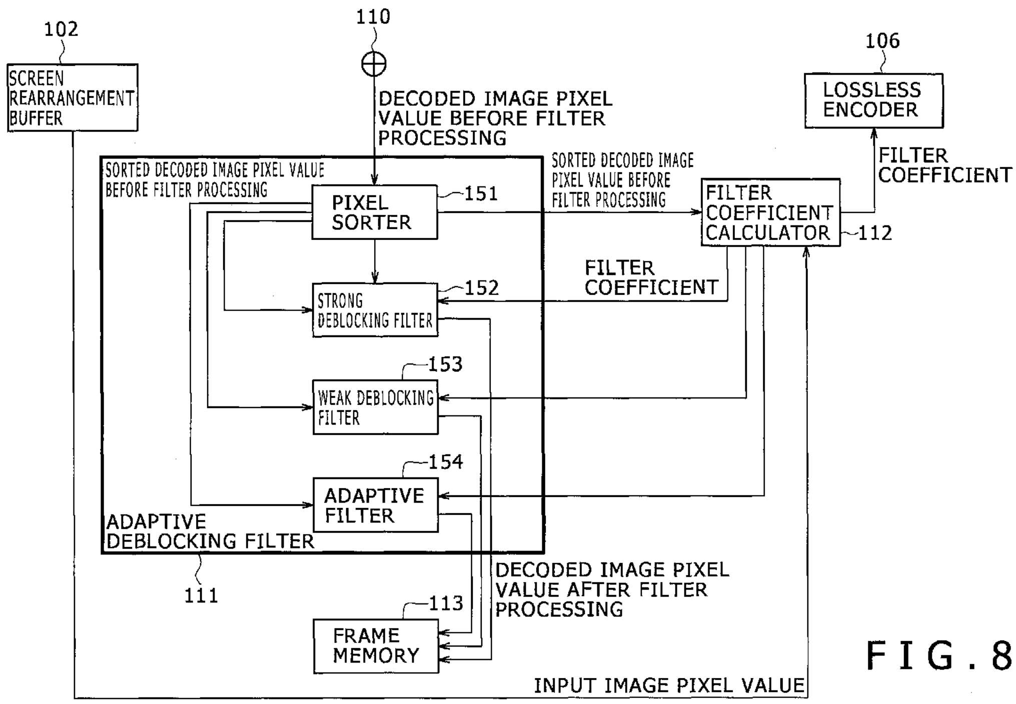


FIG. 8

EP 2 521 356 A1

Printed by Jouve, 75001 PARIS (FR)

## Description

Technical Field

The present invention relates to an image processing device and method and a program, and particularly to an image processing device and method and a program that make it possible to more efficiently perform encoding and decoding with high encoding efficiency.

Background Art

In recent years, devices compliant with a system, such as MPEG (Moving Picture Experts Group), to treat image information as digital information and, at this time, compress the image information by an orthogonal transform such as the discrete cosine transform and motion compensation by utilizing redundancy unique to the image information for the purpose of high-efficient information transmission and accumulation are becoming widespread for both of information distribution of a broadcasting station etc. and information reception in ordinary households.

In particular, MPEG2 (ISO (International Organization for Standardization)/IEC (International Electrotechnical Commission) 13818-2) is defined as a general-purpose image encoding system and is a standard covering both of interlaced scan image and progressive scan image and standard-resolution image and high-definition image. Presently it is widely used for a broad range of professional-use and consumer-use applications. By using the MPEG2 compression system, high compression rate and favorable image quality can be realized e.g. by allocating a code amount (bit rate) of 4 to 8 Mbps in the case of a standard-resolution interlaced scan image having 720 × 480 pixels or allocating a code amount (bit rate) of 18 to 22 Mbps in the case of a high-resolution interlaced scan image having 1920 × 1088 pixels.

The MPEG2 is intended mainly for high image quality encoding compatible with broadcasting but does not support a code amount (bit rate) lower than MPEG1, i.e. an encoding system with a higher compression rate. The needs for such an encoding system will become greater in the future due to popularization of portable terminals, and standardization of the MPEG4 encoding system has been carried out responding to this. As for the image encoding system, the standard thereof is approved to be an international standard as ISO/IEC14496-2 in December 1998.

Moreover, in recent years, standardization of a standard, H.26L (ITU-T (ITU Telecommunication Standardization Sector) Q6/16 VCEG (Video Coding Experts Group)), is proceeding for the purpose of image encoding for videoconferencing initially. It is known that higher encoding efficiency is realized in H.26L although a larger arithmetic amount is required for encoding and decoding thereof compared with conventional encoding systems such as MPEG2 and MPEG4. Furthermore, presently, as part of the activities of MPEG4, based on this H.26L, standardization to realize higher encoding efficiency by introducing also functions that are not supported by H.26L is being carried out as Joint Model of Enhanced-Compression Video Coding. As the schedule of the standardization, it has become an international standard in the name of H.264 and MPEG4 Part10 (AVC (Advanced Video Coding)) in March 2003.

Moreover, as extension thereof, standardization of FRExt (Fidelity Range Extension) including also encoding tools necessary for the use of professionals, such as RGB, 4:2:2, and 4:4:4, and 8 × 8 DCT (Discrete Cosine Transform) and quantization matrix defined by MPEG2 is carried out. Thereby, it has become an encoding system capable of favorably expressing even film noise included in a movie by using AVC and has been decided to be used for a broad range of applications such as Blu-Ray Disc.

However, nowadays the needs for encoding with a higher compression rate, such as the need to compress an image of about 4000 × 2000 pixels, which is four times a high-vision image, or the need to distribute a high-vision image in an environment of limited transmission capacity like the Internet, are becoming greater. Therefore, in the above-described VCEG under the umbrella of ITU-T, studies relating to improvement in the encoding efficiency are being continuously made.

Furthermore, recently there is an adaptive loop filter (ALF) as a next-generation video encoding technique on which studies are made (refer to e.g. Non-Patent Document 1 and Non-Patent Document 2). By this loop filter, the optimum filter processing is performed for each frame and blockiness that is not completely removed by a deblocking filter and distortion due to quantization can be reduced.

By the way, setting the macroblock size to 16 pixels × 16 pixels is not the most appropriate for a large image frame, such as UHD (Ultra High Definition; 4000 pixels × 2000 pixels), that will be the subject of a next-generation encoding system. It has been proposed to set the macroblock size to a size of e.g. 32 pixels × 32 pixels or 64 × 64 pixels in such a case (refer to e.g. Non-Patent Document 3).

Prior Art Documents

Non-Patent Documents

Non-Patent Document 1: Yi-Jen Chiu and L. Xu, "Adaptive (Wiener) Filter for Video Compression," ITU-T SG16 Contribution, C437, Geneva, April 2008
Non-Patent Document 2: Takeshi. Chujoh, et al., "Block-based Adaptive Loop Filter" ITU-T SG16 Q6 VCEG Contribution, A118, Germany, July, 2008
Non-Patent Document 3: Qualcomm Inc, "Video Coding Using Extended Block Sizes" ITU-T SG16 Contribution, C123, English, January 2009

Summary of Invention

Technical Problems

However, in the conventionally proposed methods, encoding processing or decoding processing, deblocking filter processing, and adaptive filter processing are performed in a time-series manner. Therefore, in order to perform all of these kinds of processing by real-time processing, the processing must be performed by a circuit of a higher clock frequency and possibly the arithmetic amount and the power consumption increase.
The present invention is proposed in view of such circumstances and an object thereof is to enhance the efficiency of filter processing performed in encoding or decoding of an image to thereby suppress increase in the arithmetic amount and the power consumption and enable realization of real-time processing at lower cost. Technical Solution
One aspect of the present invention is an image processing device including class sorting means that sorts each pixel of an image into any of a plurality of classes depending on necessity for removal of blockiness, deblocking filter means that performs deblocking filter processing for removing the blockiness for a pixel sorted into a class with high necessity for removal of the blockiness by the class sorting means, and adaptive filter means that performs adaptive filter processing for image quality enhancement for a pixel sorted into a class with low necessity for removal of the blockiness by the class sorting means.
As the deblocking filter means, strong deblocking filter means that performs strong deblocking filter processing of strongly removing the blockiness, and weak deblocking filter means that performs weak deblocking filter processing of weakly removing the blockiness can be included. The class sorting means can sort each pixel of the image into any of three classes of a class with high necessity for strong removal of the blockiness, a class with high necessity for weak removal of the blockiness, and a class with low necessity for removal of the blockiness. The strong deblocking filter means can perform the strong deblocking filter processing for a pixel sorted into the class with high necessity for strong removal of the blockiness by the class sorting means. The weak deblocking filter means can perform the weak deblocking filter processing for a pixel sorted into the class with high necessity for weak removal of the blockiness by the class sorting means. The adaptive filter means can perform the adaptive filter processing for image quality enhancement for a pixel sorted into the class with low necessity for removal of the blockiness by the class sorting means.
The class sorting means can perform class sorting of each pixel of the image by using motion vector information or encoding information including macroblock mode information.
The image processing device can further include filter coefficient calculating means that calculates a filter coefficient used for filter processing about each of the classes sorted by the class sorting means. The deblocking filter means and the adaptive filter means can perform their own filter processing by using the filter coefficient that is calculated by the filter coefficient calculating means and corresponds to a respective one of the classes.
The image processing device can further include adding means that adds the filter coefficient calculated by the filter coefficient calculating means to the encoded data obtained by encoding of the image by the encoding means, and transmitting means that transmits the encoded data to which the filter coefficient is added by the adding means.
The filter coefficient calculating means can calculate only the filter coefficient of the adaptive filter performed for the class with low necessity for removal of the blockiness. The adaptive filter means can perform the adaptive filter by using the filter coefficient calculated by the filter coefficient calculating means. The deblocking filter means can perform the deblocking filter by using a predetermined filter coefficient that is set in advance.
The image processing device can further include decoding means that decodes encoded data obtained by encoding of the image to generate a decoded image. The class sorting means can sort each pixel of the decoded image obtained by decoding of the encoded data by the decoding means into any of a plurality of classes depending on necessity for removal of the blockiness. The deblocking filter means can perform the deblocking filter processing for a pixel sorted into a class with high necessity for removal of the blockiness by the class sorting means. The adaptive filter means can perform the adaptive filter processing for a pixel sorted into a class with low necessity for removal of the blockiness by the class sorting means.

The image processing device can further include filter coefficient acquiring means that acquires the filter coefficient from the encoded data. The deblocking filter means can perform the deblocking filter processing for a pixel sorted into the class with high necessity for removal of the blockiness by the class sorting means by using the filter coefficient that is acquired by the filter coefficient acquiring means and corresponds to the class with high necessity for removal of the blockiness. The adaptive filter means can perform the adaptive filter processing for a pixel sorted into the class with low necessity for removal of the blockiness by the class sorting means by using the filter coefficient that is acquired by the filter coefficient acquiring means and corresponds to the class with low necessity for removal of the blockiness.

Furthermore, one aspect of the present invention is an image processing method. In the image processing method, class sorting means of an image processing device sorts each pixel of an image into any of a plurality of classes depending on necessity for removal of blockiness. Deblocking filter means of the image processing device performs deblocking filter processing for removing the blockiness for a pixel sorted into a class with high necessity for removal of the blockiness. Adaptive filter means of the image processing device performs adaptive filter processing for image quality enhancement for a pixel sorted into a class with low necessity for removal of the blockiness.

Moreover, one aspect of the present invention is a program for making a computer function as class sorting means that sorts each pixel of an image into any of a plurality of classes depending on necessity for removal of blockiness, deblocking filter means that performs deblocking filter processing for removing the blockiness for a pixel sorted into a class with high necessity for removal of the blockiness by the class sorting means, and adaptive filter means that performs adaptive filter processing for image quality enhancement for a pixel sorted into a class with low necessity for removal of the blockiness by the class sorting means.

In one aspect of the present invention, each pixel of the image is sorted into any of the plurality of classes depending on the necessity for removal of the blockiness. The deblocking filter processing for removing the blockiness is performed for the pixel sorted into the class with high necessity for removal of the blockiness. The adaptive filter processing for image quality enhancement is performed for the pixel sorted into the class with low necessity for removal of the blockiness. Advantageous Effect

According to the present invention, an image can be encoded or decoded. In particular, in the encoding or the decoding of the image, filter processing for enhancing the encoding efficiency can be performed more efficiently. Brief Description of Drawings

[FIG. 1]
FIG. 1 is a block diagram showing a main configuration example of an image encoding device to which the present invention is applied.
[FIG. 2]
FIG. 2 is a diagram for explaining the operating principle of a deblocking filter.
[FIG. 3]
FIG. 3 is a diagram for explaining a method of definition of Bs.
[FIG. 4]
FIG. 4 is a diagram for explaining the operating principle of the deblocking filter.
[FIG. 5]
FIG. 5 is a diagram showing an example of the correspondence relationship between indexA and indexB and the values of $\alpha$ and $\beta$.
[FIG. 6]
FIG. 6 is a diagram showing an example of the correspondence relationship among Bs, indexA, and $t_{C0}$.
[FIG. 7]
FIG. 7 is a diagram showing an example of a macroblock.
[FIG. 8]
FIG. 8 is a block diagram showing a main configuration example of an adaptive deblocking filter.
[FIG. 9]
FIG. 9 is a flowchart for explaining an example of the flow of encoding processing.
[FIG. 10]
FIG. 10 is a flowchart for explaining an example of the flow of prediction processing.
[FIG. 11]
FIG. 11 is a flowchart for explaining an example of the flow of adaptive deblocking filter processing.
[FIG. 12]
FIG. 12 is a timing chart for explaining an example of the flow of processing relating to encoding or decoding.
[FIG. 13]

FIG. 13 is a block diagram showing a configuration example of a conventional filter.
[FIG. 14]
FIG. 14 is a flowchart for explaining an example of the flow of processing relating to conventional encoding or decoding.
[FIG. 15]
FIG. 15 is a block diagram showing a main configuration example of an image decoding device to which the present invention is applied.
[FIG. 16]
FIG. 16 is a block diagram showing a main configuration example of an adaptive deblocking filter.
[FIG. 17]
FIG. 17 is a flowchart for explaining an example of the flow of decoding processing.
[FIG. 18]
FIG. 18 is a flowchart for explaining an example of the flow of predicted image generation processing.
[FIG. 19]
FIG. 19 is a flowchart for explaining an example of the flow of adaptive deblocking filter processing.
[FIG. 20]
FIG. 20 is a block diagram showing a main configuration example of a personal computer to which the present invention is applied.
[FIG. 21]
FIG. 21 is a block diagram showing a main configuration example of a television receiver to which the present invention is applied.
[FIG. 22]
FIG. 22 is a block diagram showing a main configuration example of a cellular phone to which the present invention is applied.
[FIG. 23]
FIG. 23 is a block diagram showing a main configuration example of a hard disk recorder to which the present invention is applied.
[FIG. 24]
FIG. 24 is a block diagram showing a main configuration example of a camera to which the present invention is applied.

Modes for Carrying Out the Invention

Modes for carrying out the invention (hereinafter, referred to as embodiments) will be described below. The description will be made in the following order.

1. First Embodiment (image encoding device)
2. Second Embodiment (image decoding device)
3. Third Embodiment (personal computer)
4. Fourth Embodiment (television receiver)
5. Fifth Embodiment (cellular phone)
6. Sixth Embodiment (hard disk recorder)
7. Seventh Embodiment (camera)

<1. First Embodiment>

[Device Configuration]

FIG. 1 shows the configuration of one embodiment of an image encoding device as the image processing device to which the present invention is applied.
An image encoding device 100 shown in FIG. 1 is e.g. an encoding device that performs compression encoding of an image by the H.264 and MPEG (Moving Picture Experts Group) 4 Part 10 (AVC (Advanced Video Coding)) (hereinafter, referred to as H.264/AVC). Furthermore, it employs an adaptive loop filter.
In the example of FIG. 1, the image encoding device 100 has an A/D (Analog/Digital) converter 101, a screen rearrangement buffer 102, an arithmetic section 103, an orthogonal transformer 104, a quantizer 105, a lossless encoder 106, and an accumulation buffer 107. Furthermore, the image encoding device 100 has an inverse quantizer 108, an inverse orthogonal transformer 109, and an arithmetic section 110. Moreover, the image encoding device 100 has an adaptive deblocking filter 111, a filter coefficient calculator 112, and a frame memory 113. Furthermore, the image encoding device 100 has a selector 114, an intra prediction section 115, a motion prediction/compensation section 116, and a selector 117. Moreover, the image encoding device 100 has a rate controller 118.

The A/D converter 101 performs A/D conversion of input image data and outputs the converted data to the screen rearrangement buffer 102 to make it be stored. The screen rearrangement buffer 102 rearranges the stored image of frames in display order into the order of frames for encoding depending on the GOP (Group of Picture) structure. The screen rearrangement buffer 102 supplies the image for which the order of the frames is rearranged to the arithmetic section 103, the intra prediction section 115, the motion prediction/compensation section 116, and the filter coefficient calculator 112.

The arithmetic section 103 subtracts a predicted image supplied from the selector 117 from the image read out from the screen rearrangement buffer 102 and outputs difference information thereof to the orthogonal transformer 104. For example, in the case of an image for which intra encoding is performed, the arithmetic section 103 adds a predicted image supplied from the intra prediction section 115 to the image read out from the screen rearrangement buffer 102. Furthermore, for example, in the case of an image for which inter encoding is performed, the arithmetic section 103 adds a predicted image supplied from the motion prediction/compensation section 116 to the image read out from the screen rearrangement buffer 102.

The orthogonal transformer 104 performs an orthogonal transform such as the discrete cosine transform or the Karhunen-Loeve transform for the difference information from the arithmetic section 103 and supplies the transform coefficient thereof to the quantizer 105. The quantizer 105 quantizes the transform coefficient output by the orthogonal transformer 104. The quantizer 105 supplies the quantized transform coefficient to the lossless encoder 106.

The lossless encoder 106 performs lossless encoding such as variable length encoding or arithmetic encoding for the quantized transform coefficient.

The lossless encoder 106 acquires information showing intra prediction and so forth from the intra prediction section 115 and acquires information showing an inter prediction mode and so forth from the motion prediction/compensation section 116. The information showing intra prediction will be referred to also as the intra prediction mode information hereinafter. Furthermore, information showing an information mode showing inter prediction will be referred to also as the inter prediction mode information hereinafter.

The lossless encoder 106 further acquires a filter coefficient used in the adaptive deblocking filter 111 from the filter coefficient calculator 112.

The lossless encoder 106 encodes the quantized transform coefficient and turns (multiplexes) the filter coefficient, the intra prediction mode information, the inter prediction mode information, a quantization parameter, and so forth to part of header information of encoded data. The lossless encoder 106 supplies the encoded data obtained by encoding to the accumulation buffer 107 to make it be accumulated.

For example, lossless encoding processing such as variable length encoding or arithmetic encoding is performed in the lossless encoder 106. The variable length encoding includes CAVLC (Context-Adaptive Variable Length Coding) defined in the H.264/AVC system, and so forth. The arithmetic encoding includes CABAC (Context-Adaptive Binary Arithmetic Coding) and so forth.

The accumulation buffer 107 temporarily retains the encoded data supplied from the lossless encoder 106 and, at predetermined timing, outputs it to e.g. subsequent-stage recording device and transmission path that are not shown in the diagram as an encoded image encoded by the H.264/AVC system.

Furthermore, the transform coefficient quantized in the quantizer 105 is supplied also to the inverse quantizer 108. The inverse quantizer 108 performs inverse quantization of the quantized transform coefficient by a method corresponding to the quantization by the quantizer 105 and supplies the obtained transform coefficient to the inverse orthogonal transformer 109.

The inverse orthogonal transformer 109 performs an inverse orthogonal transform of the supplied transform coefficient by a method corresponding to the orthogonal transform processing by the orthogonal transformer 104. The output resulting from the inverse orthogonal transform is supplied to the arithmetic section 110.

The arithmetic section 110 adds the predicted image supplied from the selector 117 to the inverse orthogonal transform result supplied from the inverse orthogonal transformer 109, i.e. restored difference information, to obtain a locally-decoded image (decoded image). For example, if the difference information corresponds to an image for which intra encoding is performed, the arithmetic section 110 adds the predicted image supplied from the intra prediction section 115 to the difference information. Furthermore, for example, if the difference information corresponds to an image for which inter encoding is performed, the arithmetic section 110 adds the predicted image supplied from the motion prediction/compensation section 116 to the difference information.

The addition result is supplied to the adaptive deblocking filter 111 or the frame memory 113.

The adaptive deblocking filter 111 removes blockiness of the decoded image by accordingly performing deblocking filter processing with use of the filter coefficient calculated by the filter coefficient calculator 112, and performs image quality improvement by accordingly performing loop filter processing with use of e.g. a Wiener filter. The adaptive deblocking filter 111 performs class sorting of the respective pixels and performs proper filter processing for each class. The adaptive deblocking filter 111 supplies the filter processing result to the frame memory 113.

The filter coefficient calculator 112 calculates the class-by-class filter coefficients used in the adaptive deblocking filter 111. The filter coefficient calculator 112 acquires the decoded image from the frame memory 113. Furthermore, the input image read out from the screen rearrangement buffer 102 is also supplied to the filter coefficient calculator 112.
Upon acquiring information about class sorting from the adaptive deblocking filter 111, the filter coefficient calculator 112 calculates the filter coefficient of each class based on the image supplied from the frame memory 113 and the screen rearrangement buffer 102 and so forth and supplies it to the adaptive deblocking filter 111.
Furthermore, the filter coefficient calculator 112 supplies the generated filter coefficient of each class also to the lossless encoder 106. The filter coefficients are included in the encoded data (multiplexed) by the lossless encoder 106 as described above. That is, the filter coefficient of each class is sent to an image decoding device together with the encoded data.
The frame memory 113 outputs an accumulated reference image to the intra prediction section 115 or the motion prediction/compensation section 116 via the selector 114 at predetermined timing.
For example, in the case of an image for which intra encoding is performed, the frame memory 113 supplies the reference image to the intra prediction section 115 via the selector 114. Furthermore, for example, in the case of an image for which inter encoding is performed, the frame memory 113 supplies the reference image to the motion prediction/compensation section 116 via the selector 114.
In the image encoding device 100, e.g. 1-picture, B-picture, and P-picture from the screen rearrangement buffer 102 are supplied to the intra prediction section 115 as an image for which intra prediction (referred to also as intra processing) is performed. Furthermore, B-picture and P-picture read out from the screen rearrangement buffer 102 are supplied to the motion prediction/compensation section 116 as an image for which inter prediction (referred to also as inter processing) is performed.
The selector 114 supplies the reference image supplied from the frame memory 113 to the intra prediction section 115 in the case of an image for which intra encoding is performed, and supplies it to the motion prediction/compensation section 116 in the case of an image for which inter encoding is performed.
The intra prediction section 115 performs intra prediction processing of all intra prediction modes as candidates based on the image that is read out from the screen rearrangement buffer 102 and is subjected to intra prediction and the reference image supplied from the frame memory 113, to generate a predicted image.
The intra prediction mode information applied to the relevant block/macroblock in the intra prediction section 115 is transmitted to the lossless encoder 106 and turned to part of header information in the encoded data. For the luminance signal, an intra $4 \times 4$ prediction mode, an intra $8 \times 8$ prediction mode, and an intra $16 \times 16$ prediction mode are defined. Furthermore, regarding the color difference signal, a prediction mode that is independent of the luminance signal can be defined for each macroblock.
As for the intra $4 \times 4$ prediction mode, one intra prediction mode is defined for each $4 \times 4$ luminance block. As for the intra $8 \times 8$ prediction mode, one intra prediction mode is defined for each $8 \times 8$ luminance block. For the intra $16 \times 16$ prediction mode and the color difference signal, one prediction mode is each defined for one macroblock.
The intra prediction section 115 calculates a cost function value for the intra prediction mode in which the predicted image is generated and selects the intra prediction mode whose calculated cost function value gives the minimum value as the optimum intra prediction mode. The intra prediction section 115 supplies the predicted image generated in the optimum intra prediction mode to the arithmetic section 103 via the selector 117.
About an image for which inter encoding is performed, the motion prediction/compensation section 116 calculates a motion vector by using the input image supplied from the screen rearrangement buffer 102 and the decoded image that is supplied from the frame memory 113 and works as a reference frame. The motion prediction/compensation section 116 performs motion compensation processing depending on the calculated motion vector and generates a predicted image (inter-predicted image information).
The motion prediction/compensation section 116 performs inter prediction processing of all inter prediction modes as candidates to generate the predicted image. This inter prediction mode is the same as the case of the intra prediction mode.
The motion prediction/compensation section 116 calculates a cost function value for the inter prediction mode in which the predicted image is generated and selects the inter prediction mode whose calculated cost function value gives the minimum value as the optimum inter prediction mode. The motion prediction/compensation section 116 supplies the predicted image generated in the optimum inter prediction mode to the arithmetic section 103 via the selector 117.
The motion prediction/compensation section 116 supplies motion vector information showing the calculated motion vector to the lossless encoder 106. This motion vector information is included in the encoded data (multiplexed) by the lossless encoder 106. That is, the motion vector information is sent to the image decoding device together with the encoded data.
The selector 117 supplies the output of the intra prediction section 115 to the arithmetic section 103 in the case of an image for which intra encoding is performed, and supplies the output of the motion prediction/compensation section 116 to the arithmetic section 103 in the case of an image for which inter encoding is performed.

The rate controller 118 controls the rate of the quantization operation of the quantizer 105 based on the compressed image accumulated in the accumulation buffer 107 so that the occurrence of overflow or underflow may be avoided.

[Deblocking Filter]

Next, the deblocking filter in the AVC encoding system and so forth will be described. The deblocking filter removes blockiness in a decoded image. Thereby, propagation of blockiness to an image referenced in motion compensation processing is suppressed.

As processing of the deblocking filter, the following three methods (a) to (c) can be selected depending on two parameters included in the encoded data, specifically deblocking_filter_control_present_flag included in Picture Parameter Set RBSP (Raw Byte Sequence Payload) and disable_deblocking_filter_idc included in the slice header (Slice Header).

(a) performed for block boundary and macroblock boundary
(b) performed only for macroblock boundary
(c) not performed

As for a quantization parameter QP, QPY is used if the following processing is applied to the luminance signal and QPC is used if it is applied to the color difference signal. Furthermore, in motion vector encoding, intra prediction, and entropy encoding (CAVLC/CABAC), a pixel value that belongs to a different slice is processed as "not available." However, in the deblocking filter processing, even a pixel value that belongs to a different slice is processed as "available" if it belongs to the same picture.

In the following, as shown in FIG. 2, pixel values before the deblocking filter processing are defined as p0 to p3 and q0 to q3 and pixel values after the processing are defined as p0' to p3' and q0' to q3'.

First, ahead of the deblocking filter processing, Bs (Boundary Strength) is defined as shown by a table shown in FIG. 3 for p and q in FIG. 2.

The deblocking filter processing is performed for (p2, p1, p0, q0, q1, q2) in FIG. 2 only when conditions shown by the following expression (1) and expression (2) hold.

$$Bs > 0 \ldots (1)$$

$$|p0 - q0| < \alpha; \ |p1 - p0| < \beta; \ |q1 - 10| < \beta \ldots (2)$$

For $\alpha$ and $\beta$ in expression (2), the values thereof are defined depending on QP as follows in the default. However, as shown by the arrow in a graph shown in FIG. 4, the user can adjust the strength thereof by two parameters, slice_alpha_c0_offset_div2 and slice_beta_offset_div2, included in the slice header of the encoded data.

As shown in tables shown in A of FIG. 5 and B of FIG. 5, $\alpha$ is obtained from indexA. Similarly, $\beta$ is obtained from indexB. These indexA and indexB are defined as shown by the following expression (3) to expression (5) .

$$qP_{av} = (qP_p + qP_q + 1) >> 1 \ldots (3)$$

$$indexA = Clip3(0, 51, qP_{av} + FilterOffsetA) \ldots (4)$$

$$indexB = Clip3(0, 51, qP_{av} + FilterOffsetB) \ldots (5)$$

In expression (4) and expression (5), FilterOffsetA and FilterOffsetB are equivalent to the amount of adjustment by the user.

For the deblocking filter processing, methods different from each other between the case of Bs < 4 and the case of Bs = 4 are defined as described below. In the case of Bs < 4, the pixel values p'0 and q'0 after the deblocking filter processing are obtained as shown by the following expression (6) to expression (8).

$$\Delta = Clip3(-t_c, t_c((((q0 - p0) << 2) + (p1 - q1) + 4) >> 3)) \ldots (6)$$

$$p'0 = Clip1(p0 + \Delta) \ldots (7)$$

$$q'0 = Clip1(q0 + \Delta) \ldots (8)$$

Here, $t_c$ is calculated as shown by the following expression (9) or expression (10). Specifically, if the value of chromaEdgeFlag is "0," $t_c$ is calculated as shown by the following expression (9).

$$t_c = t_{c0} + ((a_p < \beta)?1:0) + ((a_p < \beta)?1:0) \ldots (9)$$

Furthermore, if the value of chromaEdgeFlag is other than "0," $t_c$ is calculated as shown by the following expression (10).

$$t_c = t_{c0} + 1 \ldots (10)$$

The value of $t_{C0}$ is defined as shown by tables shown in A of FIG. 6 and B of FIG. 6 depending on the values of Bs and indexA.

Furthermore, the values of $a_p$ and $a_q$ of expression (9) are calculated as shown by the following expressions (11) and (12).

$$a_p = |p2 - p0| \ldots (11)$$

$$a_q = |q2 - q0| \ldots (12)$$

The pixel value p'1 after the deblocking filter processing is obtained as follows. Specifically, if the value of chromaEdgeFlag is "0" and the value of $a_p$ is equal to or smaller than $\beta$, p'1 is obtained as shown by the following expression (13).

$$p'1 = p1 + Clip3(-t_{c0}, t_{c0}, (p2 + ((p0 + q0 + 1) >> 1) - (p1 << 1)) >> 1) \dots (13)$$

Furthermore, if expression (13) does not hold, p'1 is obtained as shown by the following expression (14).
$$p'1 = p1 \dots (14)$$

The pixel value q'1 after the deblocking filter processing is obtained as follows. Specifically, if the value of chromaEdgeFlag is "0" and the value of $a_q$ is equal to or smaller than $\beta$, q'1 is obtained as shown by the following expression (15).
$$q'1 = q1 + Clip3(-t_{c0}, t_{c0}, (q2 + ((p0 + q0 + 1) >> 1) - (q1 << 1)) >> 1) \dots (15)$$

Furthermore, if expression (15) does not hold, q'1 is obtained as shown by the following expression (16).
$$q'1 = q1 \dots (16)$$

The values of p'2 and q'2 are the same as values p2 and q2 before Filtering. That is, p'2 is obtained as shown by the following expression (17) and q'2 is obtained as shown by the following expression (18).
$$p'2 = p2 \dots (17)$$

$$q'2 = q2 \dots (18)$$

In the case of Bs = 4, the pixel value p'1 (i = 0..2) after the deblocking filter is obtained as follows. If the value of chromaEdgeFlag is "0" and a condition shown by the following expression (19) holds, p'0, p'1, and p'2 are obtained as shown by the following expression (20) to expression (22).
$$a_p < \beta \&\& |p0 - q0| < ((\alpha >> 2) + 2) \dots (19)$$

$$p'0 = (p2 + 2 \times p1 + 2 \times p0 + 2 \times q0 + q1 + 4) >> 3 \dots (20)$$

$$p'1 = (p2 + p1 + p0 + q0 + 2) >> 2 \ldots (21)$$

$$p'2 = (2 \times p3 + 3 \times p2 + p1 + p0 + q0 + 4) >> 3 \ldots (22)$$

Furthermore, if the condition shown by expression (19) does not hold, p'0, p'1, and p'2 are obtained as shown by the following expression (23) to expression (25).

$$p'0 = (2 \times p1 + p0 + q1 + 2) >> 2 \ldots (23)$$

$$p'1 = p1 \ldots (24)$$

$$p'2 = p2 \ldots (25)$$

The pixel value q'i (1 = 0..2) after the deblocking filter processing is obtained as follows. Specifically, if the value of chromaEdgeFlag is "0" and a condition shown by the following expression (26) holds, q'0, q'1, and q'2 are obtained as shown by the following expression (27) to expression (29).

$$a_q < \beta \&\& |p0 - q0| < ((\alpha >> 2) + 2) \ldots (26)$$

$$q'0 = (p1 + 2 \times p0 + 2 \times q0 + 2 \times q1 + q2 + 4) >> 3 \ldots (27)$$

$$q'1 = (p0 + q0 + q1 + q2 + 2) >> 2 \ldots (28)$$

$$q'2 = (2 \times q3 + 3 \times q2 + q1 + q0 + p4 + 4) >> 3 \ldots (29)$$

Furthermore, if the condition shown by expression (26) does not hold, q'0, q'1, and q'2 are obtained as shown by the following expression (30) to expression (32).

$$q'0 = (2 \times q1 + q0 + p1 + 2) >> 2 \ldots (30)$$

$$q'1 = q1 \ldots (31)$$

$$q'2 = q2 \ldots (32)$$

[Loop Filter]

By the way, in the case of transmission of an image having a higher resolution such as 4000 × 2000 pixels and transmission of an existing high-vision image in a line of limited bandwidth like the Internet, the compression rate realized by AVC is still insufficient.

So, there is a method using a loop filter as one technique of encoding efficiency improvement. As the loop filter, e.g. the Wiener Filter is applied. The loop filter performs filter processing for e.g. a decoded image for which deblocking filter processing is performed, to thereby minimize the residual from the original image.

Also in decoding processing, similar loop filter processing is performed for the pixel value after the deblocking filter processing by using a Wiener Filter coefficient transmitted together with encoded data.

By doing so, the image quality of the decoded image can be enhanced and the image quality of the reference image can also be enhanced.

[Selection of Prediction Mode]

By the way, setting the macroblock size to 16 pixels × 16 pixels is not the most appropriate for a large image frame, such as UHD (Ultra High Definition; 4000 pixels × 2000 pixels), that will be the subject of a next-generation encoding system. So, it has been proposed to set the macroblock size to a size of e.g. 32 pixels × 32 pixels or 64 × 64 pixels.

To achieve higher encoding efficiency, selection of the proper prediction mode is important. For example, a method of selecting two mode determining methods, High Complexity Mode and Low Complexity Mode, will be available. In the case of this method, in both, a cost function value relating to each prediction mode Mode is calculated and the prediction mode that minimizes it is selected as the optimum mode for the relevant block or macroblock.

The cost function in High Complexity Mode can be obtained as shown by the following expression (33).

$$\mathrm{Cost}(\mathrm{Mode} \in \Omega) = D + \lambda \times R \ldots (33)$$

In expression (33), Ω is the universal set of candidate modes for encoding of this block or macroblock. Furthermore, D is the difference energy of the decoded image and the input image when encoding is performed in this prediction mode Mode. Moreover, λ is Lagrange's undetermined multiplier given as a function of the quantization parameter. Furthermore, R is the total code amount when encoding is performed in this mode Mode, including the orthogonal transform coefficient.

That is, to perform encoding in High Complexity Mode, provisional encode processing needs to be performed once in all candidate modes Mode in order to calculate the above-described parameters D and R. Thus, a higher arithmetic amount is required.

In contrast, the cost function in Low Complexity Mode can be obtained as shown by the following expression (34) .

$$\mathrm{Cost}(\mathrm{Mode} \in \Omega) = D + \mathrm{QP2Quant}(QP) \times \mathrm{HeaderBit} \ldots (34)$$

In expression (34), D is the difference energy of the predicted image and the input image differently from the case of High Complexity Mode. Furthermore, QP2Quant(QP) is given as a function of the quantization parameter QP. Moreover, HeaderBit is a code amount relating to information that belongs to Header, such as motion vector and mode, not including the orthogonal transform coefficient.

That is, in Low Complexity Mode, although prediction processing needs to be performed about each candidate mode Mode, the decoded image is unnecessary and therefore encoding processing does not need to be performed. Thus, realization with an arithmetic amount lower than that in High Complexity Mode is possible.

By the way, setting the macroblock size to 16 pixels × 16 pixels is not the most appropriate for a large image frame, such as UHD, that will be the subject of a next-generation encoding system. It has been proposed to set the macroblock size to a size of e.g. 32 pixels × 32 pixels as shown in FIG. 7.

By employing a hierarchical structure like FIG. 7, regarding the block of 16 × 16 pixels and the smaller blocks, a larger block is defined as a super set thereof with keeping of compatibility with the macroblock in the present AVC.

[Adaptive Deblocking Filter]

In the following, first, the operating principle in the filter coefficient calculator 112 and the adaptive deblocking filter 111 will be described.

In the adaptive deblocking filter 111, first, all pixels included in the relevant frame are sorted into three classes of a pixel value including a block boundary that should be given the filter corresponding to Bs = 4, a block boundary that should be given the filter corresponding to Bs = 1, 2, 3, and a pixel value that includes another block boundary and does not need to be given the deblocking filter depending on the necessity of the deblocking filter processing (blockiness removal) by the same method as that defined in AVC. Furthermore, information relating to this is transmitted to the filter coefficient calculator 112.

In the filter coefficient calculator 112, decision of filter coefficients for respective classes in this frame is performed by using a method of the Wiener Filter like that proposed in Non-Patent Document 2, and this is transmitted to the adaptive deblocking filter 111.

In the adaptive deblocking filter 111 again, the filter coefficients corresponding to the respective classes are applied to the respective pixels. Thereby, blockiness removal effect in the deblocking filter defined in AVC and image quality improvement by an adaptive filter proposed in Non-Patent Document 2 can be realized by a single circuit.

As specifically described later, by doing so, the number of clocks for real-time operation of the circuit may be smaller than that in the method proposed in Non-Patent Document 2.

Furthermore, in the AVC encoding system, although it is possible to adaptively make change regarding the condition as to whether the deblocking filter is applied or not applied depending on the condition of the quantization parameter QP and so forth, it is impossible to change the strength itself of the strong filter and the weak filter depending on the degree of the deterioration of the decoded image in an analog manner. In the present invention, as described above, performing the deblocking filter processing appropriate for the degree of the deterioration of the decoded image is permitted by rendering the coefficient of the deblocking filter adaptive.

The deblocking filter processing when the Wiener Filter is applied is as follows.

Specifically, the above-described expression (6) becomes the following expression (35) by using u as the Wiener Filter coefficient and offset.

$$\Delta = \mathrm{Clip3}(-t_c, t_c(u0 \times p1 + u1 \times p0 + u2 \times q0 + u3 \times q1 + u4)) \quad \ldots (35)$$

Furthermore, expression (20) to expression (22) become the following expression (36) to expression (38) by using v as the Wiener Filter coefficient and offset.

$$p'0 = v00 \times p2 + v01 \times p1 + v02 \times p0 + v03 \times q0 + v04 \times q1 + v05 \quad \ldots (36)$$

$$p'1 = v10 \times p2 + v11 \times p1 + v12 \times p0 + v13 \times q0 + v14 \ldots (37)$$

$$p'2 = v20 \times p3 + v21 \times p2 + v22 \times p1 + v23 \times p0 + v24 \times q0 + v25 \ldots (38)$$

Furthermore, expression (23) becomes the following expression (39) by using w as the Wiener Filter coefficient and offset.

$$p'0 = w0 \times p1 + w1 \times p0 + w2 \times q1 + w3 \ldots (39)$$

Furthermore, expression (27) to expression (29) become the following expression (40) to expression (42) by using x as the Wiener Filter coefficient and offset.

$$q'0 = x00 \times p1 + x01 \times p0 + x02 \times q0 + x03 \times q1 + x04 \times q2 + x05 \ldots (40)$$

$$q'1 = x10 \times p0 + x11 \times q0 + x12 \times q1 + x13 \times q2 + x14 \ldots (41)$$

$$q'2 = x20 \times q3 + x21 \times q2 + x22 \times q1 + x23 \times q0 + x24 \times p4 + x25 \ldots (42)$$

Furthermore, expression (30) becomes the following expression (43) by using y as the Wiener Filter coefficient and offset.

$$q'0 = y0 \times q1 + y1 \times q0 + y2 \times p1 + y3 \ldots (43)$$

The respective Wiener Filter coefficients are so calculated that the residual of the total of the pixel value included in the respective classes becomes the minimum.

[Detailed Configuration Example]

FIG. 8 is a block diagram showing a main configuration example of the adaptive deblocking filter 111.

As shown in FIG. 8, the adaptive deblocking filter 111 has a pixel sorter 151, a strong deblocking filter 152, a weak deblocking filter 153, and an adaptive filter 154.

The pixel values before filter processing are supplied from the arithmetic section 110 to the pixel sorter 151. By using encoding information such as motion vector information and macroblock mode information for example, the pixel sorter 151 sorts the pixels into any of three classes of the pixel that should be given the strong deblocking filter corresponding to Bs = 4 in AVC (class with high necessity for strong removal of blockiness), the pixel that should be given the weak deblocking filter corresponding to Bs = 1, 2, 3 (class with high necessity for weak removal of blockiness), and other pixels including pixels other than the block boundary (class with low necessity for blockiness removal).

The pixel sorter 151 supplies the pixel value before filter processing to the strong deblocking filter 152, the weak deblocking filter 153, or the adaptive filter 154 in accordance with the class sorting result.

Specifically, when determining that the supplied pixel value is a pixel value of the pixel that should be given the strong deblocking filter corresponding to Bs = 4 in AVC, the pixel sorter 151 supplies the pixel value to the strong deblocking filter 152.

Furthermore, when determining that the supplied pixel value is a pixel value of the pixel that should be given the weak deblocking filter corresponding to Bs = 1, 2, 3, the pixel sorter 151 supplies the pixel value to the weak deblocking filter 153.

Moreover, when determining that the supplied pixel value is a pixel value of other pixels including pixels other than the block boundary, the pixel sorter 151 supplies the pixel value to the adaptive filter 154.

Furthermore, the pixel sorter 151 supplies the class-sorted pixel values before filter processing to the filter coefficient calculator 112 irrespective of which class the pixel value is sorted into.

Moreover, the pixel values of the input image are supplied from the screen rearrangement buffer 102 to the filter coefficient calculator 112.

By using these pixel values, the filter coefficient calculator 112 calculates filter coefficients for the respective three sorted classes based on a method of the Wiener Filter or the like.

The calculated filter coefficient is supplied to any of the strong deblocking filter 152, the weak deblocking filter 153, and the adaptive filter 154 depending on the class. Specifically, the filter coefficient calculator 112 supplies the filter coefficient of the class of the pixel that should be given the strong deblocking filter to the strong deblocking filter 152, and supplies the filter coefficient of the class of the pixel that should be given the weak deblocking filter to the weak deblocking filter 153. In addition, the filter coefficient calculator 112 supplies the filter coefficient of the class of other pixels including pixels other than the block boundary to the adaptive filter 154.

Furthermore, the filter coefficient calculator 112 supplies the calculated filter coefficients of the respective classes also to the lossless encoder 106. The lossless encoder 106 buries the filter coefficients into encoded data and outputs them together with the encoded data.

The strong deblocking filter 152, the weak deblocking filter 153, and the adaptive filter 154 each perform filter processing for the pixel value supplied from the arithmetic section 110 by using the filter coefficient supplied from the filter coefficient calculator 112.

The strong deblocking filter 152, the weak deblocking filter 153, and the adaptive filter 154 each supply the decoded image pixel value after filter processing to the frame memory 113 to make it be accumulated.

By performing class sorting of the pixel value and performing the proper filter processing corresponding to the class in this manner, the adaptive deblocking filter 111 can perform the filter processing more efficiently. Thereby, the image encoding device 100 can perform encoding with high encoding efficiency more efficiently. Furthermore, it can suppress increase in the arithmetic amount and the power consumption and can realize real-time processing at lower cost.

The Wiener Filter may be applied only for the adaptive filter processing for other pixel values by the adaptive filter 154, and the deblocking filter processing by the strong deblocking filter 152 and the weak deblocking filter 153 may be performed by a method similar to that defined in the AVC standard.

Furthermore, in the above, it is explained that the filter coefficient is buried in the encoded data (image compression information) obtained in the lossless encoder 106. If the filter coefficient of the strong deblocking filter and the weak deblocking filter is not transmitted as such a filter coefficient, deblocking filter processing similar to that defined in AVC is supposed to be performed on the side of the image decoding device to be described later. Conversely, if the filter coefficient for other pixel values is not transmitted, filter processing is supposed not to be performed on the side of the image decoding device to be described later.

[Flow of Processing]

Next, the flow of processing with use of the respective sections configured as above will be described. First, an example of the flow of encoding processing performed by the image encoding device 100 will be described with reference to a flowchart of FIG. 9.

In a step S101, the A/D converter 101 performs A/D conversion of the input image. In a step S102, the screen rearrangement buffer 102 stores the A/D-converted image and performs rearrangement from the order of displaying of the respective pictures to the order of encoding.

In a step S103, the intra prediction section 115, the motion prediction/compensation section 116, and so forth decide the prediction mode and perform prediction processing to generate the predicted image. Details of this prediction processing will be described later.

In a step S104, the arithmetic section 103 calculates the difference between the image rearranged by the processing of the step S102 and the predicted image generated by the prediction processing of the step S103. The predicted image is supplied from the motion prediction/compensation section 116 in the case of performing inter prediction or from the intra prediction section 115 in the case of performing intra prediction to the arithmetic section 103 via the selector 117 respectively.

The difference data has a smaller data amount compared with the original image data. Therefore, the data amount can be compressed compared with the case of encoding the image as it is.

In a step S105, the orthogonal transformer 104 performs an orthogonal transform of the difference information generated by the processing of the step S104. Specifically, an orthogonal transform such as the discrete cosine transform or the Karhunen-Loeve transform is performed and a transform coefficient is output. In a step S106, the quantizer 105 quantizes the transform coefficient. In this quantization, the rate is controlled as explained for processing of a step S113 to be described later.

In a step S107, the lossless encoder 106 encodes the quantized transform coefficient output from the quantizer 105.

Furthermore, the quantized difference information is locally decoded in the following manner. Specifically, in a step S108, the inverse quantizer 108 inversely quantizes the transform coefficient quantized by the quantizer 105 with characteristics corresponding to the characteristics of the quantizer 105. In a step S109, the inverse orthogonal transformer 109 performs an inverse orthogonal transform of the transform coefficient inversely quantized by the inverse quantizer 108 with characteristics corresponding to the characteristics of the orthogonal transformer 104.

In a step S110, the arithmetic section 110 adds the predicted image supplied via the selector 117 to the locally-decoded difference information to generate a locally-decoded image (image corresponding to input to the arithmetic section 103).

When the above-described processing is performed for one picture, in a step S111, the adaptive deblocking filter 111 and the filter coefficient calculator 112 perform adaptive deblocking filter processing for the decoded image supplied from the arithmetic section 110 to the adaptive deblocking filter 111. Details of this adaptive deblocking filter processing will be described later.

In a step S112, the accumulation buffer 107 accumulates the encoded data. The encoded data accumulated in the accumulation buffer 107 is accordingly read out to be transmitted to the decoding side via a transmission path.

In a step S113, the rate controller 118 controls the rate of the quantization operation of the quantizer 105 based on the encoded data accumulated in the accumulation buffer 107 so that the occurrence of overflow or underflow may be avoided.

Next, an example of the flow of the prediction processing performed in the step S103 in FIG. 9 will be described with reference to a flowchart of FIG. 10.

Upon the start of the prediction processing, in a step S131, the intra prediction section 115 calculates cost function values for the respective modes of intra 4 × 4, intra 8 × 8, and intra 16 × 16 (respective intra modes prepared in advance) by using the reference image acquired from the frame memory 113 via the selector 114 and the input image supplied from the screen rearrangement buffer 102.

In a step S132, the intra prediction section 115 decides the best mode for each of intra 4 × 4, intra 8 x 8, and intra 16 × 16 based on the cost function values for the respective modes, calculated in the step S131.

In a step S133, the intra prediction section 115 selects the best intra mode among intra 4 × 4, intra 8 x 8, and intra 16 × 16.

In parallel to the respective kinds of processing of the step S131 to the step S133, the motion prediction/compensation section 116 performs the respective kinds of processing of a step S134 to a step S137.

In the step S134, the motion prediction/compensation section 116 performs a motion search. In the step S135, the motion prediction/compensation section 116 decides motion vectors and reference frames for the respective modes of inter 16 × 16 to 4 × 4.

In the step S136, the motion prediction/compensation section 116 calculates cost function values for the respective modes of inter 16 × 16 to 4 × 4.

In the step S137, the motion prediction/compensation section 116 decides the best inter mode based on the cost function values.

In a step S138, the selector 117 decides either one of the best intra mode selected in the step S133 and the best inter mode decided in the step S137 as the best mode.

In a step S139, the intra prediction section 115 or the motion prediction/compensation section 116 corresponding to the mode decided as the best mode generates the predicted image. This predicted image is supplied to the arithmetic section 103 and the arithmetic section 110 via the selector 117. Furthermore, the prediction mode information of the best mode at this time (intra prediction mode information or inter prediction mode information) is supplied to the lossless encoder 106.

Upon the generation of the predicted image, the prediction processing is ended. The process returns to the step S103 in FIG. 9, so that the processing of the step S104 and the subsequent steps is performed.

Next, an example of the flow of the adaptive deblocking filter processing performed in the step S111 in FIG. 9 will be described with reference to a flowchart of FIG. 11.

Upon the start of the adaptive deblocking filter processing, in a step S151, the pixel sorter 151 of the adaptive deblocking filter 111 performs class sorting of the respective pixels in the relevant frame into the pixel that should be given the strong deblocking filter (block boundary pixel value corresponding to Bs = 4 in AVC), the pixel that should be given the weak deblocking filter (block boundary pixel value corresponding to Bs = 1, 2, 3 in AVC), or other pixels.

In a step S152, the filter coefficient calculator 112 calculates the filter coefficients of the respective classes by the Wiener Filter.

In a step S153, the strong deblocking filter 152, the weak deblocking filter 153, and the adaptive filter 154 each perform their own filter processing for the pixels of the respective classes by using the filter coefficient of the corresponding class.

In a step S154, the lossless encoder 106 encodes the filter coefficients of the respective classes, calculated in the step S152, and buries them in e.g. the header of the encoded data.

Upon the end of the processing of the step S154, the adaptive deblocking filter processing is ended. The process returns to the step S111 in FIG. 9, so that the processing of the step S112 and the subsequent steps is performed.

[Time Flow]

By performing class sorting of the pixel value and performing the proper filter processing corresponding to the class in the above-described manner, the image encoding device 100 can perform the filter processing as shown by a time flow shown in FIG. 12 for example. Specifically, the image encoding device 100 performs encoding processing 161 and performs an adaptive deblocking filter 162 after the end thereof to thereby accordingly perform both of deblocking filter processing and loop filter processing. For the next frame, the image encoding device 100 performs encoding processing 163 and performs an adaptive deblocking filter 164 after the end thereof to thereby accordingly perform both of deblocking filter processing and loop filter processing.

FIG. 13 shows a configuration example of deblocking filter and loop filter in a conventional image encoding device.

For example, in the case of the image encoding device defined in conventional AVC, a deblocking filter 171 is provided between the arithmetic section 110 and the frame memory 113 as shown in A of FIG. 13, and the time flow of this case is as shown in A of FIG. 14. In FIG. 14, the arrow indicates the time axis. That is, the time goes from the left to the right in the diagram.

Specifically, encoding processing 181 is performed and then a deblocking filter 182 is performed. For the next frame, encoding processing 183 is performed and then a deblocking filter 184 is performed. However, in this case, loop filter processing is not performed.

In contrast, in the case of the image encoding device proposed in Non-Patent Document 2, a loop filter 172 is further provided between the deblocking filter 171 and the frame memory 113 as shown in B of FIG. 13, and the time flow of this case is as shown in B of FIG. 14.

Specifically, the encoding processing 181 is performed and then the deblocking filter 182 is performed. Subsequently, an adaptive filter 185 is performed. Then, for the next frame, the encoding processing 183 is performed and then the deblocking filter 184 is performed. Subsequently, an adaptive filter 186 is performed.

As just described, in the conventional case, because the deblocking filter processing and the loop filter processing are sequentially performed, the number of clocks necessary to perform the whole processing increases corresponding to the loop filter processing.

In contrast, the image encoding device 100 performs class sorting of the pixel value and performs the proper filter processing corresponding to the class as described above. Thus, as shown by the time flow shown in FIG. 12, the deblocking filter processing and the loop filter processing can be collectively performed. That is, the number of clocks for real-time operation of the circuit that performs these kinds of processing can be reduced.

As just described, the image encoding device 100 can perform encoding with high encoding efficiency more efficiently. Furthermore, it can suppress increase in the arithmetic amount and the power consumption and can realize real-time processing at lower cost.

In the above, "add" indicates associating of the filter coefficient with encoded data in any form. For example, it may be described as the syntax of the encoded data or may be described as user data. Furthermore, the filter coefficient may be set to a state of being linked with the encoded data as metadata. That is, "addition" includes "burying," "description," "multiplexing," "coupling," and so forth. This applies also to the following.

Furthermore, the number of classes of sorting is any. In addition, the criterion of the sorting is also any as long as it is meaningful.

Furthermore, the processing unit of the filter may be the frame or may be the slice or may be other than them. In addition, the unit of performing of the class sorting may be other than the pixel, such as the macroblock.

<2. Second Embodiment>

[Configuration of Device]

Next, an image decoding device corresponding to the image encoding device 100 explained in the first embodiment will be described. FIG. 15 is a block diagram showing a configuration example of one embodiment of an image decoding device as the image processing device to which the present invention is applied.

An image decoding device 200 decodes encoded data output from the image encoding device 100 to generate a decoded image.

The image decoding device 200 has an accumulation buffer 201, a lossless decoder 202, an inverse quantizer 203, an inverse orthogonal transformer 204, an arithmetic section 205, and an adaptive deblocking filter 206. Furthermore, the image decoding device 200 has a screen rearrangement buffer 207 and a D/A (Digital/Analog) converter 208. Moreover, the image decoding device 200 has a frame memory 209, a selector 210, an intra prediction section 211, a motion prediction/compensation section 212, and a selector 213.

The accumulation buffer 201 accumulates the transmitted encoded data. The lossless decoder 202 decodes the information that is supplied from the accumulation buffer 201 and is encoded by the lossless encoder 106 in FIG. 1 by a system corresponding to the encoding system of the lossless encoder 106.

If the relevant macroblock is an intra-encoded macroblock, the lossless decoder 202 extracts intra prediction mode information stored in the header part of the encoded data and supplies it to the intra prediction section 211. Furthermore, if the relevant macroblock is an inter-encoded macroblock, the lossless decoder 202 extracts motion vector information, inter prediction mode information, and so forth stored in the header part of the encoded data and supplies them to the motion prediction/compensation section 212.

Moreover, the lossless decoder 202 extracts the filter coefficients for the respective classes from the encoded data and supplies them to the adaptive deblocking filter 206.

The inverse quantizer 203 inversely quantizes the image decoded by the lossless decoder 202 by a system corresponding to the quantization system of the quantizer 105 in FIG. 1.

The inverse orthogonal transformer 204 performs an inverse orthogonal transform of the output of the inverse quantizer 203 by a system corresponding to the orthogonal transform system of the orthogonal transformer 104 in FIG. 1. The inverse orthogonal transformer 204 supplies the difference information subjected to the inverse orthogonal transform to the arithmetic section 205.

The arithmetic section 205 adds a predicted image supplied from the selector 213 to the difference information subjected to the inverse orthogonal transform to generate a decoded image, and supplies the decoded image generated by the addition processing to the adaptive deblocking filter 206.

The adaptive deblocking filter 206 performs filter processing for the respective classes by using the filter coefficients of the respective classes, supplied from the lossless decoder 202, to remove blockiness of the decoded image. Furthermore, the adaptive deblocking filter 206 performs image quality improvement by accordingly performing loop filter processing with use of e.g. the wiener filter (Wiener Filter).

The adaptive deblocking filter 206 is a processing section corresponding to the adaptive deblocking filter 111 of the image encoding device 100 and performs the same filter processing basically. However, the adaptive deblocking filter 206 of the image decoding device 200 can use the filter coefficient buried in the encoded data (supplied from the image encoding device 100). That is, the image decoding device 200 does not need the filter coefficient calculator.

The adaptive deblocking filter 206 supplies the image resulting from the filter processing to the frame memory 209 to make it be accumulated as a reference image, and outputs it to the screen rearrangement buffer 207.

The screen rearrangement buffer 207 rearranges the image. Specifically, the frame order rearranged for the order of encoding by the screen rearrangement buffer 102 in FIG. 1 is rearranged to the original order of displaying. The D/A converter 208 performs D/A conversion of the image supplied from the screen rearrangement buffer 207 and outputs the converted image. For example, the D/A converter 208 outputs the output signal obtained by the D/A conversion to a display that is not shown in the diagram and makes the image be displayed.

If the relevant frame is an intra-encoded frame, the intra prediction section 211 acquires the reference image from the frame memory 209 via the selector 210 and generates a predicted image based on the information supplied from the lossless decoder 202 to supply the generated predicted image to the arithmetic section 205 via the selector 213.

If the relevant frame is an inter-encoded frame, the motion prediction/compensation section 212 acquires the reference image from the frame memory 209 via the selector 210 and performs motion compensation processing for the reference image based on the motion vector information supplied from the lossless decoder 202 to generate a predicted image. The motion prediction/compensation section 212 supplies the generated predicted image to the arithmetic section 205 via the selector 213.

If the relevant macroblock is an intra-encoded macroblock, the selector 213 connects to the intra prediction section 211 and supplies the image supplied from the intra prediction section 211 to the arithmetic section 205 as the predicted image. Furthermore, if the relevant macroblock is an inter-encoded macroblock, the selector 213 connects to the motion prediction/compensation section 212 and supplies the image supplied from the motion prediction/compensation section 212 to the arithmetic section 205 as the predicted image.

FIG. 16 is a block diagram showing a detailed configuration example of the adaptive deblocking filter 206 in FIG. 15.

As shown in FIG. 16, the adaptive deblocking filter 206 has a filter coefficient buffer 251, a pixel sorter 252, a strong deblocking filter 253, a weak deblocking filter 254, and an adaptive filter 255.

When being supplied with the filter coefficients that are read out from the encoded data and correspond to the respective classes from the lossless decoder 202, the filter coefficient buffer 251 acquires and retains the filter coefficients.

Furthermore, when being supplied with the decoded image pixel value before filter processing from the arithmetic section 205, the pixel sorter 252 acquires it. Moreover, when being supplied with information relating to the syntax element for deciding whether the strong filter should be given or the weak filter should be given or another filter should be given, such as motion vector and macroblock type, from the lossless decoder 202, the pixel sorter 252 acquires it.

Based on the information relating to the syntax element supplied from the lossless decoder 202, the pixel sorter 252 decides whether the respective pixels supplied from the arithmetic section 205 should be given the strong filter or should be given the weak filter or should be given another filter.

The result of this class sorting is the same as the case of the class sorting by the pixel sorter 151 of the image encoding device 100. The pixel sorter 252 supplies the pixel value before filter processing to the strong deblocking filter 253, the weak deblocking filter 254, or the adaptive filter 255 in accordance with the decision.

The strong deblocking filter 253, the weak deblocking filter 254, or the adaptive filter 255 each acquires the filter coefficient corresponding to oneself from the filter coefficient buffer 251 and performs its own filter processing for the pixel supplied from the pixel sorter 252.

The strong deblocking filter 253, the weak deblocking filter 254, or the adaptive filter 255 each supplies the decoded image pixel value after filter processing to the screen rearrangement buffer 207 and the frame memory 209.

The pixel value supplied to the screen rearrangement buffer 207 is output as a decoded image. Furthermore, the pixel value supplied to the frame memory 209 is accumulated in the frame memory 209 and is utilized as a reference image in decoding of the next frame.

By performing class sorting of the pixel value and performing the proper filter processing corresponding to the class in this manner, the adaptive deblocking filter 206 can perform the filter processing more efficiently. Thereby, the image decoding device 200 can perform decoding with high encoding efficiency more efficiently. Furthermore, it can suppress increase in the arithmetic amount and the power consumption and can realize real-time processing at lower cost.

The adaptive deblocking filter 206 uses the filter coefficients generated in the image encoding device 100 as described above. Thus, it does not need to calculate the filter coefficients of the respective classes and can perform the filter processing more easily than the case of the image encoding device 100.

[Flow of Processing]

An example of the flow of the decoding processing performed by this image decoding device 200 will be described with reference to a flowchart of FIG. 17.

In a step S201, the accumulation buffer 201 accumulates the transmitted image (encoded data). In a step S202, the lossless decoder 202 extracts the filter coefficients from the encoded data. Furthermore, the lossless decoder 202 also extracts motion vector information, reference frame information, prediction mode information (intra prediction mode information and inter prediction mode information), and so forth.

In a step S203, the lossless decoder 202 performs lossless decoding of the encoded data. In a step S204, the inverse quantizer 203 inversely quantizes the transform coefficient obtained by the decoding of the encoded data in the step S203 with characteristics corresponding to the characteristics of the quantizer 105 in FIG. 1. In a step S205, the inverse orthogonal transformer 204 performs an inverse orthogonal transform of the transform coefficient inversely quantized by the processing of the step S204 with characteristics corresponding to the characteristics of the orthogonal transformer 104 in FIG. 1. Thereby, the difference information corresponding to the input of the orthogonal transformer 104 in FIG. 1 (output of the arithmetic section 103) is decoded.

In a step S206, the intra prediction section 211, the motion prediction/compensation section 212, and so forth perform predicted image generation processing to generate a predicted image according to the prediction mode. Details of this predicted image generation processing will be described later. In a step S207, the arithmetic section 205 adds the predicted image generated in the step S206 to the difference information decoded by the processing to the step S205. Thereby, the original image is restored.

In a step S208, the adaptive deblocking filter 206 performs adaptive deblocking filter processing for the image output from the arithmetic section 205. Details of this adaptive deblocking filter processing will be described later.

In a step S209, the screen rearrangement buffer 207 performs rearrangement. Specifically, the order of the frames rearranged for encoding by the screen rearrangement buffer 102 of the image encoding device 100 in FIG. 1 is rearranged to the original order of displaying.

In a step S210, the D/A converter 208 performs D/A conversion of the image rearranged in the step S209. This image is output to a display that is not shown in the diagram, so that the image is displayed. Upon the end of the processing of the step S210, the decoding processing is ended.

Next, an example of the flow of the predicted image generation processing performed in the step S206 in FIG. 17 will be described with reference to a flowchart of FIG. 18.

Upon the start of the predicted image generation processing, in a step S231, the lossless decoder 202 determines whether or not the relevant block is intra-encoded based on the information on the prediction mode and so forth extracted in the step S202. If the relevant block is an intra-encoded block, the lossless decoder 202 supplies the intra prediction mode information extracted from the encoded data to the intra prediction section 211 and the process proceeds to a step S232.

In the step S232, the intra prediction section 211 acquires the intra prediction mode information supplied from the lossless decoder 202. Upon acquiring the intra prediction mode information, in a step S233, the intra prediction section 211 acquires the reference image from the frame memory 209 via the selector 210 based on the intra prediction mode information to generate an intra-predicted image. Upon generating the intra-predicted image, the intra prediction section 211 supplies the intra-predicted image to the arithmetic section 205 via the selector 213 as the predicted image.

Furthermore, if it is determined in the step S231 that the relevant block is inter-encoded, the lossless decoder 202 supplies motion prediction mode, reference frame, motion vector information, and so forth extracted from the encoded data to the motion prediction/compensation section 212 and the process proceeds to a step S234.

In the step S234, the motion prediction/compensation section 212 acquires motion prediction mode, reference frame, motion vector information, and so forth supplied from the lossless decoder 202. Upon acquiring these pieces of information, the motion prediction/compensation section 212 selects an interpolation filter depending on the motion vector information in a step S235, and acquires the reference image from the frame memory 209 via the selector 210 to generate an inter-predicted image in a step S236. Upon generating the inter-predicted image, the motion prediction/compensation section 212 supplies the inter-predicted image to the arithmetic section 205 via the selector 213 as the predicted image.

Upon the end of the processing of the step S233 or the step S236, the predicted image generation processing is ended. The process returns to the step S206 in FIG. 17, so that the processing of the step S207 and the subsequent steps is performed.

Next, an example of the flow of the adaptive deblocking filter processing performed in the step S208 in FIG. 17 will be described with reference to a flowchart in FIG. 19.

Upon the start of the adaptive deblocking filter processing, in a step S251, the filter coefficient buffer 251 acquires the filter coefficients of the respective classes from the lossless decoder 202.

In a step S252, the pixel sorter 252 sorts the respective pixel values included in the relevant frame into any class of the pixel to be given the strong deblocking filter, the pixel to be given the weak deblocking filter, or the pixel to be given the adaptive filter (performs class sorting of the respective pixels) by a method equivalent to the AVC deblocking filter.

In a step S253, the strong deblocking filter 253, the weak deblocking filter 254, and the adaptive filter 255 perform filter processing for the pixel of the class corresponding to oneself by using the filter coefficient corresponding to oneself, acquired from the filter coefficient buffer 251.

In a step S254, the strong deblocking filter 253, the weak deblocking filter 254, and the adaptive filter 255 each store the pixel value for which the filter processing has been performed in the frame memory 209.

Upon the end of the processing of the step S254, the adaptive deblocking filter processing is ended. The process returns to the step S208 in FIG. 17, so that the processing of the step S209 and the subsequent step is performed.

[Time Flow]

By performing class sorting of the pixel value and performing the proper filter processing corresponding to the class in the above-described manner, the image decoding device 200 can perform the filter processing as shown by the time flow shown in FIG. 12 for example. Specifically, the image decoding device 200 performs the decoding processing 161 and performs the adaptive deblocking filter 162 after the end thereof to thereby accordingly perform both of deblocking filter processing and loop filter processing. For the next frame, the image decoding device 200 performs the decoding processing 163 and performs the adaptive deblocking filter 164 after the end thereof to thereby accordingly perform both of deblocking filter processing and loop filter processing.

In contrast, for example in the case of the image encoding device defined in conventional AVC, as shown in A of FIG. 14, the decoding processing 181 is performed and then the deblocking filter 182 is performed. For the next frame, the decoding processing 183 is performed and then the deblocking filter 184 is performed.

Furthermore, in the case of the image encoding device proposed in Non-Patent Document 2, as shown in B of FIG. 14, the decoding processing 181 is performed and then the deblocking filter 182 is performed. Subsequently, the adaptive filter 185 is performed. Then, for the next frame, the decoding processing 183 is performed and then the deblocking filter 184 is performed. Subsequently, the adaptive filter 186 is performed.

As just described, in the conventional case, because the deblocking filter processing and the loop filter processing are sequentially performed, the number of clocks necessary to perform the whole processing increases corresponding to the loop filter processing.

In contrast, the image decoding device 200 performs class sorting of the pixel value and performs the proper filter processing corresponding to the class as described above. Thus, as shown by the time flow shown in FIG. 12, the deblocking filter processing and the loop filter processing can be collectively performed. That is, the number of clocks for real-time operation of the circuit that performs these kinds of processing can be reduced.

As just described, the image decoding device 200 can perform decoding with high encoding efficiency more efficiently. Furthermore, it can suppress increase in the arithmetic amount and the power consumption and can realize real-time processing at lower cost.

<3. Third Embodiment>

[Personal Computer]

The above-described series of processing can be performed by hardware and can also be performed by software. In this case, the configuration may be made as a personal computer like that shown in FIG. 20 for example.

In FIG. 20, a CPU 501 of a personal computer 500 executes various kinds of processing in accordance with a program stored in a ROM (Read Only Memory) 502 or a program loaded from a storing section 513 to a RAM (Random Access Memory) 503. Furthermore, data and so forth necessary for the execution of various kinds of processing by the CPU 501 is also accordingly stored in the RAM 503.

The CPU 501, the ROM 502, and the RAM 503 are connected to each other via a bus 504. Furthermore, an input/output interface 510 is also connected to this bus 504.

To the input/output interface 510, an input section 511 composed of a keyboard, a mouse, etc., an output section 512 composed of a display formed of a CRT (Cathode Ray Tube), an LCD (Liquid Crystal Display), or the like, a speaker, etc., the storing section 513 composed of a hard disk etc., and a communication section 514 composed of a modem etc. are connected. The communication section 514 performs communication processing via a network including the Internet.

Furthermore, a drive 515 is connected to the input/output interface 510 according to need. A removable medium 521 such as magnetic disk, optical disk, magneto-optical disk, or semiconductor memory is accordingly loaded therein, and a computer program read out from them is installed in the storing section 513 according to need.

If the above-described series of processing is executed by software, the program configuring the software is installed from a network or a recording medium.

For example, as shown in FIG. 20, this recording medium is not only configured by the removable medium 521 that is distributed to deliver a program to the user separately from the device main body and is formed of a magnetic disk (including flexible disk), an optical disk (including CD-ROM (Compact Disc-Read Only Memory), DVD (Digital Versatile Disc)), a magneto-optical disk (including MD (Mini Disc)), or a semiconductor memory in which the program is recorded, but also configured by the ROM 502 in which the program is recorded or the hard disk included in the storing section 513, distributed to the user in such a state as to be incorporated in the device main body in advance.

The program run by the computer may be a program for which processing is performed in a time-series manner along the order explained in the present specification or may be a program for which processing is performed in parallel or at the necessary timing, such as when calling is performed.

Furthermore, in the present specification, the step describing the program recorded in the recording medium includes processing performed in a time-series manner along the described order, of course, and even processing performed in parallel or individually although being not necessarily processed in a time-series manner.

Moreover, in the present specification, the system refers to the whole device composed of plural devices.

Furthermore, the configuration explained as one device (or processing section) in the above may be divided and configured as plural devices (or processing sections). Conversely, the configuration explained as plural devices (or processing sections) in the above may be collected and configured as one device (or processing section). Moreover, a configuration other than the above-described configurations may be added to the configurations of the respective devices (or processing sections), of course. In addition, part of the configuration of a certain device (or processing section) may be included in the configuration of another device (or another processing section) as long as the configuration and operation as the whole system are substantially the same. That is, embodiments of the present invention are not limited to the above-described embodiments and various changes are possible in such a range as not to depart from the gist of the present invention.

For example, the above-described image encoding device 100 and image decoding device 200 can be applied to any piece of electronic apparatus. Examples thereof will be described below.

<4. Fourth Embodiment>

[Television Receiver]

FIG. 21 is a block diagram showing a main configuration example of a television receiver using the image decoding device 200 to which the present invention is applied.

A television receiver 1000 shown in FIG. 21 has a terrestrial tuner 1013, a video decoder 1015, a video signal processing circuit 1018, a graphic generating circuit 1019, a panel drive circuit 1020, and a display panel 1021.

The terrestrial tuner 1013 receives a broadcast wave signal of terrestrial analog broadcasting via an antenna and demodulates it to acquire a video signal and supply it to the video decoder 1015. The video decoder 1015 performs decode processing for the video signal supplied from the terrestrial tuner 1013 and supplies an obtained digital component signal to the video signal processing circuit 1018.

The video signal processing circuit 1018 performs predetermined processing such as noise removal for the video data supplied from the video decoder 1015 and supplies obtained video data to the graphic generating circuit 1019.

The graphic generating circuit 1019 generates video data of a show displayed by the display panel 1021, image data by processing based on an application supplied via a network, and so forth and supplies the generated video data and image data to the panel drive circuit 1020. Furthermore, the graphic generating circuit 1019 accordingly performs also processing of generating video data (graphic) for displaying a screen utilized by the user for item selection and so forth and supplying, to the panel drive circuit 1020, video data obtained by superimposing it on the video data of a show.

The panel drive circuit 1020 drives the display panel 1021 based on the data supplied from the graphic generating circuit 1019 and makes the display panel 1021 display video of a show and the above-described respective kinds of screens.

The display panel 1021 is formed of an LCD (Liquid Crystal Display) or the like and displays video of a show and so forth in accordance with control by the panel drive circuit 1020.

Furthermore, the television receiver 1000 has also an audio A/D (Analog/Digital) conversion circuit 1014, an audio signal processing circuit 1022, an echo cancel/audio synthesis circuit 1023, an audio amplification circuit 1024, and a speaker 1025.

The terrestrial tuner 1013 acquires not only a video signal but also an audio signal by demodulating a received broadcast wave signal. The terrestrial tuner 1013 supplies the acquired audio signal to the audio A/D conversion circuit 1014.

The audio A/D conversion circuit 1014 performs A/D conversion processing for the audio signal supplied from the terrestrial tuner 1013 and supplies the obtained digital audio signal to the audio signal processing circuit 1022.

The audio signal processing circuit 1022 performs predetermined processing such as noise removal for the audio data supplied from the audio A/D conversion circuit 1014 and supplies the obtained audio data to the echo cancel/audio synthesis circuit 1023.

The echo cancel/audio synthesis circuit 1023 supplies the audio data supplied from the audio signal processing circuit 1022 to the audio amplification circuit 1024.

The audio amplification circuit 1024 performs D/A conversion processing and amplification processing for the audio data supplied from the echo cancel/audio synthesis circuit 1023 and makes audio be output from the speaker 1025 after adjusting it to a predetermined sound volume.

Moreover, the television receiver 1000 has also a digital tuner 1016 and an MPEG decoder 1017.

The digital tuner 1016 receives a broadcast wave signal of digital broadcasting (terrestrial digital broadcasting, BS (Broadcasting Satellite)/CS (Communications Satellite) digital broadcasting) via an antenna and demodulates it to acquire an MPEG-TS (Moving Picture Experts Group-Transport Stream) and supplies it to the MPEG decoder 1017.

The MPEG decoder 1017 deactivates the scramble given to the MPEG-TS supplied from the digital tuner 1016 and extracts a stream including data of the show as the reproduction subject (viewing subject). The MPEG decoder 1017 decodes the audio packet configuring the extracted stream and supplies the obtained audio data to the audio signal processing circuit 1022. In addition, it decodes the video packet configuring the stream and supplies the obtained video data to the video signal processing circuit 1018. Furthermore, the MPEG decoder 1017 supplies EPG (Electronic Program Guide) data extracted from the MPEG-TS to a CPU 1032 via a path that is not shown in the diagram.

The television receiver 1000 uses the above-described image decoding device 200 as the MPEG decoder 1017 that decodes the video packet in this manner. The MPEG-TS transmitted from a broadcast station or the like is encoded by the image encoding device 100.

The MPEG decoder 1017 performs proper filter processing (strong deblocking filter, weak deblocking filter, or adaptive filter) for the respective pixels of the decoded image depending on the class thereof by using the class-by-class filter coefficients extracted from the encoded data supplied from the image encoding device 100 similarly to the case of the image decoding device 200. Therefore, the MPEG decoder 1017 can perform the filter processing more efficiently.

Predetermined processing is performed for the video data supplied from the MPEG decoder 1017 in the video signal processing circuit 1018 similarly to the case of the video data supplied from the video decoder 1015. In the graphic generating circuit 1019, generated video data and so forth is accordingly superimposed. The resulting video data is supplied to the display panel 1021 via the panel drive circuit 1020 and the image thereof is displayed.

Predetermined processing is performed for the audio data supplied from the MPEG decoder 1017 in the audio signal processing circuit 1022 similarly to the case of the audio data supplied from the audio A/D conversion circuit 1014. The audio data is supplied to the audio amplification circuit 1024 via the echo cancel/audio synthesis circuit 1023 and D/A conversion processing and amplification processing are performed. As a result, audio adjusted to a predetermined sound voltage is output from the speaker 1025.

Furthermore, the television receiver 1000 has also a microphone 1026 and an A/D conversion circuit 1027.

The A/D conversion circuit 1027 receives a signal of audio of the user imported by the microphone 1026 provided in the television receiver 1000 as one for audio speech and performs A/D conversion processing for the received audio signal to supply the obtained digital audio data to the echo cancel/audio synthesis circuit 1023.

If the data of audio of the user (user A) of the television receiver 1000 is supplied from the A/D conversion circuit 1027, the echo cancel/audio synthesis circuit 1023 performs echo cancel for the audio data of the user A and makes the data of audio obtained by synthesis with other audio data and so forth be output from the speaker 1025 via the audio amplification circuit 1024.

Moreover, the television receiver 1000 has also an audio codec 1028, an internal bus 1029, an SDRAM (Synchronous Dynamic Random Access Memory) 1030, a flash memory 1031, the CPU 1032, a USB (Universal Serial Bus) I/F 1033, and a network I/F 1034.

The A/D conversion circuit 1027 receives a signal of audio of the user imported by the microphone 1026 provided in the television receiver 1000 as one for audio speech and performs A/D conversion processing for the received audio signal to supply the obtained digital audio data to the audio codec 1028.

The audio codec 1028 converts the audio data supplied from the A/D conversion circuit 1027 to data of a predetermined format for transmission via a network and supplies it to the network I/F 1034 via the internal bus 1029.

The network I/F 1034 is connected to a network via a cable attached to a network terminal 1035. The network I/F 1034 transmits the audio data supplied from the audio codec 1028 to another device connected to the network for example. Furthermore, the network I/F 1034 receives e.g. audio data transmitted from another device connected via a network via the network terminal 1035 and supplies it to the audio codec 1028 via the internal bus 1029.

The audio codec 1028 converts the audio data supplied from the network I/F 1034 to data of a predetermined format and supplies it to the echo cancel/audio synthesis circuit 1023.

The echo cancel/audio synthesis circuit 1023 performs echo cancel for the audio data supplied from the audio codec 1028 and makes the data of audio obtained by synthesis with other audio data and so forth be output from the speaker 1025 via the audio amplification circuit 1024.

The SDRAM 1030 stores various kinds of data necessary for the CPU 1032 to perform processing.

The flash memory 1031 stores a program run by the CPU 1032. The program stored in the flash memory 1031 is read out by the CPU 1032 at predetermined timing such as activation timing of the television receiver 1000. In the flash memory 1031, EPG data acquired via digital broadcasting, data acquired from a predetermined server via a network, etc. are also stored.

For example, in the flash memory 1031, an MPEG-TS including content data acquired from a predetermined server via a network by control of the CPU 1032 is stored. The flash memory 1031 supplies the MPEG-TS to the MPEG decoder 1017 via the internal bus 1029 by control of the CPU 1032 for example.

The MPEG decoder 1017 processes the MPEG-TS similarly to the case of the MPEG-TS supplied from the digital tuner 1016. In this manner, the television receiver 1000 receives content data composed of video, audio, and so forth via a network to decode it by using the MPEG decoder 1017, and can display the video thereof and output the audio.

Furthermore, the television receiver 1000 has also a light receiver 1037 that optically receives an infrared signal transmitted from a remote controller 1051.

The light receiver 1037 optically receives infrared from the remote controller 1051 and outputs a control code representing the contents of user operation obtained by demodulation to the CPU 1032.

The CPU 1032 runs the program stored in the flash memory 1031 and controls the operation of the whole of the television receiver 1000 in accordance with the control code supplied from the light receiver 1037 and so forth. The CPU 1032 is connected to the respective sections of the television receiver 1000 via a path that is not shown in the diagram.

The USB I/F 1033 performs data transmission and reception with apparatus that is outside the television receiver 1000 and is connected via a USB cable attached to a USB terminal 1036. The network I/F 1034 connects to a network via a cable attached to the network terminal 1035 and performs also transmission and reception of data other than audio data with respective kinds of devices connected to the network.

The television receiver 1000 uses the image decoding device 200 as the MPEG decoder 1017 and thereby can perform the filter processing more efficiently. As a result, the television receiver 1000 can suppress increase in the arithmetic amount and power consumption of decoding processing for a broadcast wave signal received via an antenna and content data acquired via a network, and can realize real-time processing at lower cost.

<5. Fifth Embodiment>

[Cellular Phone]

FIG. 22 is a block diagram showing a main configuration example of a cellular phone using the image encoding device 100 and the image decoding device 200 to which the present invention is applied.

A cellular phone 1100 shown in FIG. 22 has a main controller 1150 that is so made as to control the respective sections in an overall manner, a power supply circuit section 1151, an operation input controller 1152, an image encoder 1153, a camera I/F section 1154, an LCD controller 1155, an image decoder 1156, a multiplexer/demultiplexer 1157, a recording/reproducing section 1162, a modulating/demodulating circuit section 1158, and an audio codec 1159. They are connected to each other via a bus 1160.

Furthermore, the cellular phone 1100 has an operation key 1119, a CCD (Charge Coupled Devices) camera 1116, a liquid crystal display 1118, a storing section 1123, a transmitting/receiving circuit section 1163, an antenna 1114, a microphone (mike) 1121, and a speaker 1117.

When a call end and power supply key is turned to the on-state by operation of the user, the power supply circuit section 1151 supplies power from a battery pack to the respective sections to thereby activate the cellular phone 1100 to the operable state.

The cellular phone 1100 performs various kinds of operation such as transmission/reception of an audio signal, transmission/reception of e-mail and image data, image photographing, or data recording in various kinds of modes such as an audio phone call mode or a data communication mode based on control of the main controller 1150 composed of CPU, ROM, RAM, etc.

For example, in the audio phone call mode, the cellular phone 1100 converts an audio signal collected by the microphone (mike) 1121 to digital audio data by the audio codec 1159. Then, the cellular phone 1100 performs spread spectrum processing for it by the modulating/demodulating circuit section 1158 and performs digital-analog conversion processing and frequency conversion processing by the transmitting/receiving circuit section 1163. The cellular phone 1100 transmits a signal for transmission obtained by the conversion processing to a base station that is not shown in the diagram via the antenna 1114. The signal for transmission (audio signal) transmitted to the base station is supplied to a cellular phone as the phone call counterpart via a public phone line network.

Furthermore, for example, in the audio phone call mode, the cellular phone 1100 amplifies a received signal received by the antenna 1114 by the transmitting/receiving circuit section 1163 and performs frequency conversion processing and analog-digital conversion processing. Then, the cellular phone 1100 performs despread spectrum processing by the modulating/demodulating circuit section 1158 and converts the signal to an analog audio signal by the audio codec 1159. The cellular phone 1100 outputs the analog audio signal obtained by the conversion from the speaker 1117.

Moreover, for example, in the case of transmitting an e-mail in the data communication mode, the cellular phone 1100 accepts the text data of the e-mail input by operation of the operation key 1119 in the operation input controller 1152. The cellular phone 1100 processes the text data in the main controller 1150 to make the data be displayed as an image on the liquid crystal display 1118 via the LCD controller 1155.

Furthermore, the cellular phone 1100 generates, in the main controller 1150, e-mail data based on the text data accepted by the operation input controller 1152, user command, and so forth. The cellular phone 1100 performs spread spectrum processing for the e-mail data by the modulating/demodulating circuit section 1158 and performs digital-analog conversion processing and frequency conversion processing by the transmitting/receiving circuit section 1163. The cellular phone 1100 transmits a signal for transmission obtained by the conversion processing to a base station that is not shown in the diagram via the antenna 1114. The signal for transmission (e-mail) transmitted to the base station is supplied to a predetermined address via network, mail server, and so forth.

Furthermore, for example, in the case of receiving an e-mail in the data communication mode, the cellular phone 1100 receives the signal transmitted from the base station by the transmitting/receiving circuit section 1163 via the antenna 1114 to amplify it and perform frequency conversion processing and analog-digital conversion processing. The cellular phone 1100 performs despread spectrum processing for the received signal by the modulating/demodulating circuit section 1158 to restore the original e-mail data. The cellular phone 1100 displays the restored e-mail data on the liquid crystal display 1118 via the LCD controller 1155.

It is also possible for the cellular phone 1100 to record (store) the received e-mail data in the storing section 1123 via the recording/reproducing section 1162.

This storing section 1123 is any rewritable storage medium. The storing section 1123 may be e.g. a semiconductor memory such as RAM or built-in flash memory, or may be a hard disk, or may be a removable medium such as magnetic disk, magneto-optical disk, optical disk, USB memory, or memory card. Of course, the storing section 1123 may be other than them.

Furthermore, for example, in the case of transmitting image data in the data communication mode, the cellular phone 1100 generates image data by the CCD camera 1116 through imaging. The CCD camera 1116 has optical devices such as lens and diaphragm and a CCD as a photoelectric conversion element. The CCD camera 1116 performs imaging of a subject and converts the intensity of the received light to an electrical signal to generate the image data of the image of the subject. The CCD camera 1116 encodes the image data by the image encoder 1153 via the camera I/F section 1154 to convert it to encoded image data.

The cellular phone 1100 uses the above-described image encoding device 100 as the image encoder 1153 that performs such processing. The image encoder 1053 performs class sorting of the pixel value and performs the proper filter processing (strong deblocking filter, weak deblocking filter, or adaptive filter) corresponding to the class thereof similarly to the case of the image encoding device 100. This allows the image encoder 1053 to perform encoding with high encoding efficiency more efficiently.

At this time, the cellular phone 1100 simultaneously performs, in the audio codec 1159, analog-digital conversion of audio collected by the microphone (mike) 1121 in the imaging by the CCD camera 1116 and performs encoding.

The cellular phone 1100 multiplexes, in the multiplexer/demultiplexer 1157, encoded image data supplied from the image encoder 1153 and digital audio data supplied from the audio codec 1159 by a predetermined system. The cellular phone 1100 performs spread spectrum processing for the multiplexed data obtained as a result by the modulating/demodulating circuit section 1158 and performs digital-analog conversion processing and frequency conversion processing by the transmitting/receiving circuit section 1163. The cellular phone 1100 transmits a signal for transmission obtained by the conversion processing to a base station that is not shown in the diagram via the antenna 1114. The signal for transmission (image data) transmitted to the base station is supplied to the communication counterpart via a network and so forth.

If the image data is not transmitted, it is also possible for the cellular phone 1100 to display the image data generated by the CCD camera 1116 on the liquid crystal display 1118 via the LCD controller 1155 without via the image encoder 1153.

Furthermore, for example, in the case of receiving data of a moving image file linked to a simplified home page or the like in the data communication mode, the cellular phone 1100 receives a signal transmitted from a base station by the transmitting/receiving circuit section 1163 via the antenna 1114 and amplifies it. In addition, the cellular phone 1100 performs frequency conversion processing and analog-digital conversion processing. The cellular phone 1100 performs despread spectrum processing for the received signal by the modulating/demodulating circuit section 1158 to restore the original multiplexed data. The cellular phone 1100 separates the multiplexed data to divide it into encoded image data and audio data in the multiplexer/demultiplexer 1157.

The cellular phone 1100 generates reproduction moving image data by decoding the encoded image data in the image decoder 1156 and displays it on the liquid crystal display 1118 via the LCD controller 1155. Thereby, for example, moving image data included in a moving image file linked to a simplified home page is displayed on the liquid crystal display 1118.

The cellular phone 1100 uses the above-described image decoding device 200 as the image decoder 1156 that performs such processing. That is, the image decoder 1156 performs class sorting of the pixel value and performs the proper filter processing (strong deblocking filter, weak deblocking filter, or adaptive filter) corresponding to the class thereof similarly to the case of the image decoding device 200. Therefore, the image decoder 1156 can perform decoding with high encoding efficiency more efficiently.

At this time, the cellular phone 1100 simultaneously converts digital audio data to an analog audio signal in the audio codec 1159 and outputs it from the speaker 1117. Thereby, for example, audio data included in a moving image file linked to a simplified home page is reproduced.

Similarly to the case of an e-mail, it is also possible for the cellular phone 1100 to record (store) received data linked to a simplified home page or the like in the storing section 1123 via the recording/reproducing section 1162.

Furthermore, the cellular phone 1100 can analyze a two-dimensional code obtained by the CCD camera 1116 through imaging and acquire information recorded in the two-dimensional code in the main controller 1150.

Moreover, the cellular phone 1100 can communicate with external apparatus with infrared by an infrared communication section 1181.

By using the image encoding device 100 as the image encoder 1153, the cellular phone 1100 can suppress increase in the arithmetic amount and the power consumption in e.g. encoding image data generated in the CCD camera 1116 and transmitting it, and can realize real-time processing at lower cost.

Furthermore, by using the image decoding device 200 as the image decoder 1156, the cellular phone 1100 can suppress increase in the arithmetic amount and the power consumption in e.g. decoding in receiving data (encoded data) of a moving image file linked to a simplified home page or the like, and can realize real-time processing at lower cost.

Although it is explained that the cellular phone 1100 uses the CCD camera 1116 in the above, an image sensor using CMOS (Complementary Metal Oxide Semiconductor) (CMOS image sensor) may be used instead of this CCD camera 1116. Also in this case, the cellular phone 1100 can perform imaging of a subject and generate the image data of the image of the subject similarly to the case of using the CCD camera 1116.

Furthermore, although the device is explained as the cellular phone 1100 in the above, the image encoding device 100 and the image decoding device 200 can be applied to any device similarly to the case of the cellular phone 1100 as long as the device is one having imaging function and communication function similar to those of this cellular phone 1100, such as PDA (Personal Digital Assistants), smartphone, UMPC (Ultra Mobile Personal Computer), netbook, and notebook personal computer.

<6. Sixth Embodiment>

[Hard Disc Recorder]

FIG. 23 is a block diagram showing a main configuration example of a hard disk recorder using the image encoding device 100 and the image decoding device 200 to which the present invention is applied.

A hard disk recorder (HDD recorder) 1200 shown in FIG. 23 is a device that stores, in a built-in hard disk, audio data and video data of a broadcast show included in a broadcast wave signal (television signal) that is received by a tuner and transmitted from a satellite or terrestrial antenna or the like, and provides the stored data to the user at timing in accordance with a command of the user.

The hard disk recorder 1200 can extract audio data and video data from a broadcast wave signal for example and accordingly decode them to store them in the built-in hard disk. Furthermore, it is also possible for the hard disk recorder 1200 to acquire audio data and video data from another device via a network for example and accordingly decode them to store them in the built-in hard disk.

Moreover, the hard disk recorder 1200 can decode audio data and video data recorded in the built-in hard disk for example and supply the decoded data to a monitor 1260. Then, the hard disk recorder 1200 can make the image thereof be displayed on the screen of the monitor 1260 and make the audio thereof be output from the speaker of the monitor 1260. Furthermore, the hard disk recorder 1200 can decode audio data and video data extracted from a broadcast wave signal acquired via the tuner or audio data and video data acquired from another device via a network for example and supply them to the monitor 1260. Then, the hard disk recorder 1200 can make the image thereof be displayed on the screen of the monitor 1260 and make the audio thereof be output from the speaker of the monitor 1260.

Of course, other kinds of operation are also possible.

As shown in FIG. 23, the hard disk recorder 1200 has a receiver 1221, a demodulator 1222, a demultiplexer 1223, an audio decoder 1224, a video decoder 1225, and a recorder controller 1226. The hard disk recorder 1200 further has an EPG data memory 1227, a program memory 1228, a work memory 1229, a display converter 1230, an OSD (On Screen Display) controller 1231, a display controller 1232, a recording/reproducing section 1233, a D/A converter 1234, and a communication section 1235.

Furthermore, the display converter 1230 has a video encoder 1241. The recording/reproducing section 1233 has an encoder 1251 and a decoder 1252.

The receiver 1221 receives an infrared signal from a remote controller (not shown) and converts it to an electrical signal to output it to the recorder controller 1226. The recorder controller 1226 is configured by e.g. a microprocessor and so forth and performs various kinds of processing in accordance with a program stored in the program memory 1228. The recorder controller 1226 uses the work memory 1229 according to need at this time.

The communication section 1235 is connected to a network and performs communication processing with another device via the network. For example, the communication section 1235 is controlled by the recorder controller 1226. It communicates with a tuner (not shown) and outputs a channel-selection control signal mainly to the tuner.

The demodulator 1222 demodulates a signal supplied from the tuner and outputs it to the demultiplexer 1223. The demultiplexer 1223 separates the data supplied from the demodulator 1222 into audio data, video data, and EPG data and outputs them to the audio decoder 1224, the video decoder 1225, or the recorder controller 1226, respectively.

The audio decoder 1224 decodes the input audio data and outputs it to the recording/reproducing section 1233.

The video decoder 1225 decodes the input video data and outputs it to the display converter 1230. The recorder controller 1226 supplies the input EPG data to the EPG data memory 1227 to make it be stored.

The display converter 1230 encodes the video data supplied from the video decoder 1225 or the recorder controller 1226 to e.g. video data of the NTSC (National Television Standards Committee) system by the video encoder 1241 and outputs it to the recording/reproducing section 1233. Furthermore, the display converter 1230 converts the size of the screen of the video data supplied from the video decoder 1225 or the recorder controller 1226 to a size corresponding to the size of the monitor 1260. Then, the display converter 1230 converts the video data to video data of the NTSC system by the video encoder 1241 and converts it to an analog signal to output it to the display controller 1232.

The display controller 1232 superimposes an OSD signal output by the OSD (On Screen Display) controller 1231 on the video signal input from the display converter 1230 under control of the recorder controller 1226, and outputs the resulting signal to the display of the monitor 1260 to make it be displayed.

Furthermore, the audio data output by the audio decoder 1224 is supplied to the monitor 1260 after being converted to an analog signal by the D/A converter 1234. The monitor 1260 outputs this audio signal from the built-in speaker.

The recording/reproducing section 1233 has a hard disk as a storage medium that records video data, audio data, etc.

The recording/reproducing section 1233 encodes e.g. the audio data supplied from the audio decoder 1224 by the encoder 1251. Furthermore, the recording/reproducing section 1233 encodes the video data supplied from the video encoder 1241 of the display converter 1230 by the encoder 1251. The recording/reproducing section 1233 synthesizes the encoded data of the audio data and the encoded data of the video data by a multiplexer. The recording/reproducing section 1233 amplifies the synthesized data through channel coding and writes the data to the hard disk via a recording head.

The recording/reproducing section 1233 reproduces data recorded in the hard disk via a reproducing head and amplifies it to separate the data into audio data and video data by a demultiplexer. The recording/reproducing section 1233 decodes the audio data and the video data by the decoder 1252. The recording/reproducing section 1233 performs D/A conversion of the decoded audio data and outputs the converted data to the speaker of the monitor 1260. Furthermore, the recording/reproducing section 1233 performs D/A conversion of the decoded video data and outputs the converted data to the display of the monitor 1260.

The recorder controller 1226 reads out the latest EPG data from the EPG data memory 1227 based on a user command indicated by an infrared signal from a remote controller received via the receiver 1221 and supplies it to the OSD controller 1231. The OSD controller 1231 generates image data associated with the input EPG data and outputs it to the display controller 1232. The display controller 1232 outputs the video data input from the OSD controller 1231 to the display of the monitor 1260 to make it be displayed. Thereby, EPG (electronic program guide) is displayed on the display of the monitor 1260.

Furthermore, the hard disk recorder 1200 can acquire various kinds of data such as video data, audio data, or EPG data supplied from another device via a network such as the Internet.

The communication section 1235 is controlled by the recorder controller 1226. It acquires encoded data such as video data, audio data, and EPG data transmitted from another device via a network and supplies it to the recorder controller 1226. The recorder controller 1226 supplies e.g. the acquired encoded data of video data and audio data to the recording/reproducing section 1233 to store it in the hard disk. At this time, the recorder controller 1226 and the recording/reproducing section 1233 may perform processing such as re-encoding according to need.

Furthermore, the recorder controller 1226 decodes the acquired encoded data of video data and audio data and supplies the obtained video data to the display converter 1230. The display converter 1230 processes the video data supplied from the recorder controller 1226 and supplies it to the monitor 1260 via the display controller 1232 to make the image thereof be displayed, similarly to the video data supplied from the video decoder 1225.

Furthermore, in association with this image displaying, the recorder controller 1226 may supply the decoded audio data to the monitor 1260 via the D/A converter 1234 and make the audio thereof be output from the speaker.

Moreover, the recorder controller 1226 decodes the acquired encoded data of EPG data and supplies the decoded EPG data to the EPG data memory 1227.

The above-described hard disk recorder 1200 uses the image decoding device 200 as the video decoder 1225, the decoder 1252, and the built-in decoder in the recorder controller 1226. That is, the video decoder 1225, the decoder 1252, and the built-in decoder in the recorder controller 1226 perform class sorting of the pixel value and perform the proper filter processing (strong deblocking filter, weak deblocking filter, or adaptive filter) corresponding to the class thereof similarly to the case of the image decoding device 200. Therefore, the video decoder 1225, the decoder 1252, and the built-in decoder in the recorder controller 1226 can perform decoding with high encoding efficiency more efficiently.

Thus, the hard disk recorder 1200 can suppress increase in the arithmetic amount and the power consumption in e.g. decoding in reception of video data (encoded data) by the tuner and the communication section 1235 and in reproduction of video data (encoded data) from the hard disk by the recording/reproducing section 1233, and can realize real-time processing at lower cost.

Furthermore, the hard disk recorder 1200 uses the image encoding device 100 as the encoder 1251. Therefore, the encoder 1251 performs class sorting of the pixel value and performs the proper filter processing (strong deblocking filter, weak deblocking filter, or adaptive filter) corresponding to the class thereof similarly to the case of the image encoding device 100. Accordingly, the encoder 1251 can perform encoding with high encoding efficiency more efficiently.

Thus, the hard disk recorder 1200 can suppress increase in the arithmetic amount and the power consumption in e.g. recording encoded data in the hard disk, and can realize real-time processing at lower cost.

Although description is made about the hard disk recorder 1200 that records video data and audio data in a hard disk in the above, the recording medium may be any medium, of course. The image encoding device 100 and the image decoding device 200 can be applied to even a recorder using a recording medium other than a hard disk, such as flash memory, optical disk, or videotape, similarly to the case of the above-described hard disk recorder 1200.

<7. Seventh Embodiment>

[Camera]

FIG. 24 is a block diagram showing a main configuration example of a camera using the image encoding device 100 and the image decoding device 200 to which the present invention is applied.

A camera 1300 shown in FIG. 24 performs imaging of a subject and makes the image of the subject be displayed on an LCD 1316. In addition, the camera 1300 converts it to image data and records it in a recording medium 1333.

A lens block 1311 allows light (i.e. video of a subject) to be incident on a CCD/CMOS 1312. The CCD/CMOS 1312 is an image sensor using CCD or CMOS. It converts the intensity of received light to an electrical signal and supplies it to a camera signal processor 1313.

The camera signal processor 1313 converts the electrical signal supplied from the CCD/CMOS 1312 to color difference signals of Y, Cr, and Cb and supplies them to an image signal processor 1314. The image signal processor 1314 performs predetermined image processing for the image signal supplied from the camera signal processor 1313 and encodes the image signal by an encoder 1341 under control of a controller 1321. The image signal processor 1314 supplies encoded data generated by encoding the image signal to a decoder 1315. Moreover, the image signal processor 1314 acquires data for displaying generated in an on-screen display (OSD) 1320 and supplies it to the decoder 1315.

In the above-described processing, the camera signal processor 1313 accordingly utilizes a DRAM (Dynamic Random Access Memory) 1318 connected via a bus 1317 and makes the DRAM 1318 retain image data, encoded data obtained by encoding the image data, and so forth according to need.

The decoder 1315 decodes the encoded data supplied from the image signal processor 1314 and supplies obtained image data (decoded image data) to the LCD 1316. Furthermore, the decoder 1315 supplies the data for displaying supplied from the image signal processor 1314 to the LCD 1316. The LCD 1316 accordingly synthesizes the image of the decoded image data supplied from the decoder 1315 and the image of the data for displaying and displays the synthesized image.

The on-screen display 1320 outputs data for displaying, such as menu screen and icon, composed of symbols, characters, or figures to the image signal processor 1314 via the bus 1317 under control of the controller 1321.

The controller 1321 executes various kinds of processing based on a signal indicating contents ordered by the user with use of an operation section 1322. In addition, the controller 1321 controls the image signal processor 1314, the DRAM 1318, an external interface 1319, the on-screen display 1320, a media drive 1323, and so forth via the bus 1317. In a FLASH ROM 1324, program, data, etc. necessary for the controller 1321 to execute various kinds of processing are stored.

For example, the controller 1321 can encode image data stored in the DRAM 1318 and decode encoded data stored in the DRAM 1318 instead of the image signal processor 1314 and the decoder 1315. At this time, the controller 1321 may perform encoding and decoding processing by the same system as the encoding and decoding system of the image signal processor 1314 and the decoder 1315, or may perform encoding and decoding processing by a system with which the image signal processor 1314 and the decoder 1315 are not compatible.

Furthermore, for example, if the start of image printing is ordered from the operation section 1322, the controller 1321 reads out image data from the DRAM 1318 and supplies it to a printer 1334 connected to the external interface 1319 via the bus 1317 to make it be printed.

Moreover, for example, if image recording is ordered from the operation section 1322, the controller 1321 reads out encoded data from the DRAM 1318 and supplies it to the recording medium 1333 loaded in the media drive 1323 via the bus 1317 to make it be stored.

The recording medium 1333 is any readable/writable removable medium such as magnetic disk, magneto-optical disk, optical disk, or semiconductor memory. The kind of the recording medium 1333 as a removable medium is also any, of course. It may be a tape device or may be a disk or may be a memory card. Of course, it may be a contactless IC card etc.

Furthermore, the media drive 1323 and the recording medium 1333 may be integrated and be configured by a non-portable storage medium like a built-in hard disk drive, SSD (Solid State Drive), etc. for example.

The external interface 1319 is configured by e.g. a USB input/output terminal and is connected to the printer 1334 when an image is printed. Furthermore, a drive 1331 is connected to the external interface 1319 according to need and a removable medium 1332 such as magnetic disk, optical disk, or magneto-optical disk is accordingly loaded. A computer program read out from them is installed in the FLASH ROM 1324 according to need.

Moreover, the external interface 1319 has a network interface connected to a predetermined network such as a LAN and the Internet. The controller 1321 can read out encoded data from the DRAM 1318 and supply it from the external interface 1319 to another device connected via a network in accordance with a command from the operation section 1322 for example. Furthermore, the controller 1321 can acquire encoded data and image data supplied from another device via a network through the external interface 1319 and make it be retained in the DRAM 1318 and supplied to the image signal processor 1314.

The above-described camera 1300 uses the image decoding device 200 as the decoder 1315. That is, the decoder 1315 performs class sorting of the pixel value and performs the proper filter processing (strong deblocking filter, weak deblocking filter, or adaptive filter) corresponding to the class thereof similarly to the case of the image decoding device 200. Thus, the decoder 1315 can perform decoding with high encoding efficiency more efficiently.

Therefore, the camera 1300 can suppress increase in the arithmetic amount and the power consumption e.g. in reading out image data generated in the CCD/CMOS 1312 and encoded data of video data from the DRAM 1318 or the recording medium 1333 and in acquiring encoded data of video data via a network, and can realize real-time processing at lower cost.

Furthermore, the camera 1300 uses the image encoding device 100 as the encoder 1341. The encoder 1341 performs class sorting of the pixel value and performs the proper filter processing (strong deblocking filter, weak deblocking filter, or adaptive filter) corresponding to the class thereof similarly to the case of the image encoding device 100. Thus, the encoder 1341 can perform encoding with high encoding efficiency more efficiently.

Therefore, the camera 1300 can suppress increase in the arithmetic amount and the power consumption e.g. in recording encoded data in the DRAM 1318 and the recording medium 1333 and in providing encoded data to another device, and can realize real-time processing at lower cost.

The decoding method of the image decoding device 200 may be applied to the decoding processing performed by the controller 1321. Similarly, the encoding method of the image encoding device 100 may be applied to the encoding processing performed by the controller 1321.

Furthermore, image data imaged by the camera 1300 may be a moving image or may be a still image.

Of course, the image encoding device 100 and the image decoding device 200 can be applied also to device and system other than the above-described device.

Furthermore, the size of the macroblock is any. The present invention can be applied to the macroblocks with every size like those shown in FIG. 7 for example. For example, the present invention can be applied to not only a macroblock like normal 16 × 16 pixels but also a macroblock that is extended (extended macroblock) like 32 × 32 pixels.

In FIG. 7, on the upper row, macroblocks that are composed of 32 × 32 pixels and divided into blocks (partitions) of 32 × 32 pixels, 32 × 16 pixels, 16 × 32 pixels, and 16 × 16 pixels are sequentially shown from the left. Furthermore, on the middle row, blocks that are composed of 16 × 16 pixels and divided into blocks of 16 × 16 pixels, 16 × 8 pixels, 8 × 16 pixels, and 8 × 8 pixels are sequentially shown from the left. Moreover, on the lower row, blocks of 8 × 8 pixels divided into blocks of 8 × 8 pixels, 8 × 4 pixels, 4 × 8 pixels, and 4 × 4 pixels are sequentially shown from the left.

That is, the macroblock of 32 × 32 pixels can be processed by the blocks of 32 × 32 pixels, 32 × 16 pixels, 16 × 32 pixels, and 16 × 16 pixels shown on the upper row.

The block of 16 × 16 pixels shown on the right side on the upper row can be processed by the blocks of 16 x 16 pixels, 16 × 8 pixels, 8 × 16 pixels, and 8 × 8 pixels shown on the middle row similarly to the H.264/AVC system.

The block of 8 × 8 pixels shown on the right side on the middle row can be processed by the blocks of 8 × 8 pixels, 8 × 4 pixels, 4 × 8 pixels, and 4 × 4 pixels shown on the lower row similarly to the H.264/AVC system.

These blocks can be classified into the following three classes. Specifically, the blocks of 32 × 32 pixels, 32 × 16 pixels, and 16 × 32 pixels shown on the upper row of FIG. 7 will be referred to as the first class. The block of 16 × 16 pixels shown on the right side on the upper row and the blocks of 16 × 16 pixels, 16 × 8 pixels, and 8 × 16 pixels shown on the middle row will be referred to as the second class. The block of 8 × 8 pixels shown on the right side on the middle row and the blocks of 8 × 8 pixels, 8 × 4 pixels, and 4 × 4 pixels shown on the lower row will be referred to as the third class.

By employing such a hierarchical structure, regarding the block of 16 × 16 pixels and the smaller blocks, a larger block can be defined as a super set thereof with keeping of compatibility with the H.264/AVC system.

For example, the image encoding device 100 and the image decoding device 200 may calculate the filter coefficient on a class-by-class basis. Furthermore, for example, the image encoding device 100 and the image decoding device 200 may set the filter coefficient corresponding to the first class, which is a class whose block size is larger than that of the second class, also for the second class. Moreover, for example, the image encoding device 100 and the image decoding device 200 may set the filter coefficient for the past same class.

The macroblock for which encoding is performed by using a comparatively-large block size like the first class and the second class does not include high frequency components comparatively. In contrast, it is considered that the macroblock for which encoding is performed by using a comparatively-small block size like the third class includes high frequency components comparatively.

So, by separately calculating the filter coefficients corresponding to the respective classes with different block sizes, enhancement in the performance of encoding suitable for local characteristics possessed by the image can be realized.

The number of taps of the filter may also be different on a class-by-class basis.

Explanation of Reference Numerals

100 Image encoding device, 111 Adaptive deblocking filter, 112 Filter coefficient calculator, 151 Pixel sorter, 152 Strong deblocking filter, 153 Weak deblocking filter, 154 Adaptive filter, 200 Image decoding device, 202 Lossless decoder, 206 Adaptive deblocking filter, 251 Filter coefficient buffer, 252 Pixel sorter, 253 Strong deblocking filter, 254 Weak deblocking filter, 255 Adaptive filter

## Claims

1. An image processing device comprising
class sorting means that sorts each pixel of an image into any of a plurality of classes depending on necessity for removal of blockiness,
deblocking filter means that performs deblocking filter processing for removing the blockiness for a pixel sorted into a class with high necessity for removal of the blockiness by the class sorting means, and
adaptive filter means that performs adaptive filter processing for image quality enhancement for a pixel sorted into a class with low necessity for removal of the blockiness by the class sorting means.

2. The image processing device according to claim 1, wherein:

    as the deblocking filter means
    strong deblocking filter means that performs strong deblocking filter processing of strongly removing the blockiness, and
    weak deblocking filter means that performs weak deblocking filter processing of weakly removing the blockiness are included;
    the class sorting means sorts each pixel of the image into any of three classes of a class with high necessity for strong removal of the blockiness, a class with high necessity for weak removal of the blockiness, and a class with low necessity for removal of the blockiness;
    the strong deblocking filter means performs the strong deblocking filter processing for a pixel sorted into the class with high necessity for strong removal of the blockiness by the class sorting means;
    the weak deblocking filter means performs the weak deblocking filter processing for a pixel sorted into the class with high necessity for weak removal of the blockiness by the class sorting means; and
    the adaptive filter means performs the adaptive filter processing for image quality enhancement for a pixel sorted into the class with low necessity for removal of the blockiness by the class sorting means.

3. The image processing device according to claim 1, wherein the class sorting means performs class sorting of each pixel of the image by using motion vector information or encoding information including macroblock mode information.

4. The image processing device according to claim 1, further comprising
filter coefficient calculating means that calculates a filter coefficient used for filter processing about each of the classes sorted by the class sorting means,
wherein the deblocking filter means and the adaptive filter means perform their own filter processing by using the filter coefficient that is calculated by the filter coefficient calculating means and corresponds to a respective one of the classes.

5. The image processing device according to claim 4, further comprising

adding means that adds the filter coefficient calculated by the filter coefficient calculating means to the encoded data obtained by encoding of the image by the encoding means, and
transmitting means that transmits the encoded data to which the filter coefficient is added by the adding means.

**6.** The image processing device according to claim 4, wherein
the filter coefficient calculating means calculates only the filter coefficient of the adaptive filter performed for the class with low necessity for removal of the blockiness,
the adaptive filter means performs the adaptive filter by using the filter coefficient calculated by the filter coefficient calculating means, and
the deblocking filter means performs the deblocking filter by using a predetermined filter coefficient that is set in advance.

**7.** The image processing device according to claim 1, further comprising
decoding means that decodes encoded data obtained by encoding of the image to generate a decoded image, wherein
the class sorting means sorts each pixel of the decoded image obtained by decoding of the encoded data by the decoding means into any of a plurality of classes depending on necessity for removal of the blockiness,
the deblocking filter means performs the deblocking filter processing for a pixel sorted into a class with high necessity for removal of the blockiness by the class sorting means, and
the adaptive filter means performs the adaptive filter processing for a pixel sorted into a class with low necessity for removal of the blockiness by the class sorting means.

**8.** The image processing device according to claim 7, further comprising
filter coefficient acquiring means that acquires the filter coefficient from the encoded data, wherein
the deblocking filter means performs the deblocking filter processing for a pixel sorted into the class with high necessity for removal of the blockiness by the class sorting means by using the filter coefficient that is acquired by the filter coefficient acquiring means and corresponds to the class with high necessity for removal of the blockiness, and
the adaptive filter means performs the adaptive filter processing for a pixel sorted into the class with low necessity for removal of the blockiness by the class sorting means by using the filter coefficient that is acquired by the filter coefficient acquiring means and corresponds to the class with low necessity for removal of the blockiness.

**9.** An image processing method, wherein
class sorting means of an image processing device sorts each pixel of an image into any of a plurality of classes depending on necessity for removal of blockiness,
deblocking filter means of the image processing device performs deblocking filter processing for removing the blockiness for a pixel sorted into a class with high necessity for removal of the blockiness, and
adaptive filter means of the image processing device performs adaptive filter processing for image quality enhancement for a pixel sorted into a class with low necessity for removal of the blockiness.

**10.** A program for making a computer function as
class sorting means that sorts each pixel of an image into any of a plurality of classes depending on necessity for removal of blockiness,
deblocking filter means that performs deblocking filter processing for removing the blockiness for a pixel sorted into a class with high necessity for removal of the blockiness by the class sorting means, and
adaptive filter means that performs adaptive filter processing for image quality enhancement for a pixel sorted into a class with low necessity for removal of the blockiness by the class sorting means.

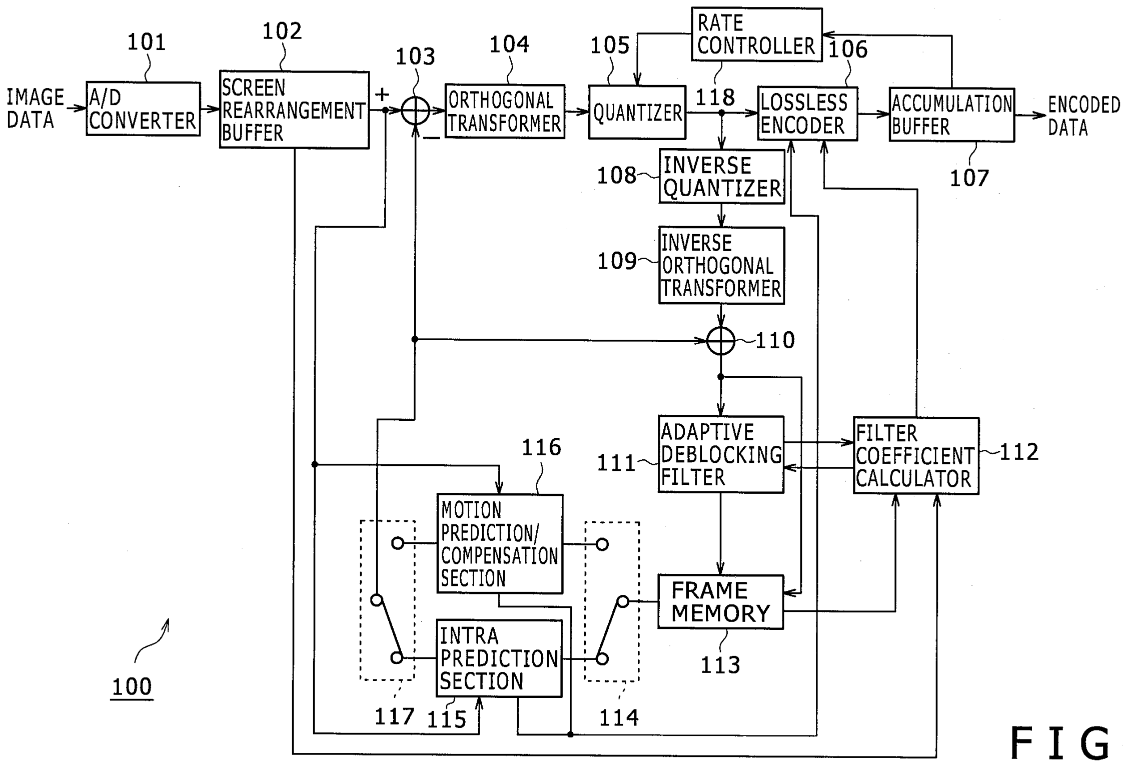
IMAGE DATA
101
A/D CONVERTER
102
SCREEN REARRANGEMENT BUFFER
103
+
−
104
ORTHOGONAL TRANSFORMER
105
QUANTIZER
RATE CONTROLLER
118
106
LOSSLESS ENCODER
ACCUMULATION BUFFER
107
ENCODED DATA
108
INVERSE QUANTIZER
109
INVERSE ORTHOGONAL TRANSFORMER
110
111
ADAPTIVE DEBLOCKING FILTER
FILTER COEFFICIENT CALCULATOR
112
116
MOTION PREDICTION/ COMPENSATION SECTION
INTRA PREDICTION SECTION
FRAME MEMORY
113
117
115
114
100

FIG. 1

FIG. 2

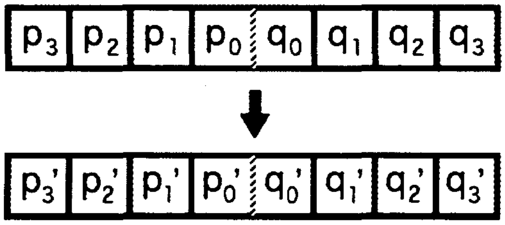


FIG. 3

| | |
|---|---|
| EITHER ONE OF p AND q BELONGS TO INTRA MACROBLOCK AND IS LOCATED AT MACROBLOCK BOUNDARY | Bs=4 (Strongest Filtering) |
| EITHER ONE OF p AND q BELONGS TO INTRA MACROBLOCK BUT IS NOT LOCATED AT MACROBLOCK BOUNDARY | Bs=3 |
| NONE OF p AND q BELONG TO INTRA MACROBLOCK AND EITHER ONE HAS TRANSFORM COEFFICIENT | Bs=2 |
| NONE OF p AND q BELONG TO INTRA MACROBLOCK AND HAVE TRANSFORM COEFFICIENT, BUT REFERENCE FRAME DIFFERS OR THE NUMBER OF REFERENCE FRAMES DIFFERS OR mv VALUE DIFFERS | Bs=1 |
| NONE OF p AND q BELONG TO INTRA MACROBLOCK AND HAVE TRANSFORM COEFFICIENT, AND BOTH REFERENCE FRAME AND mv VALUE ARE THE SAME | Bs=0 (No Filtering) |

FIG. 4

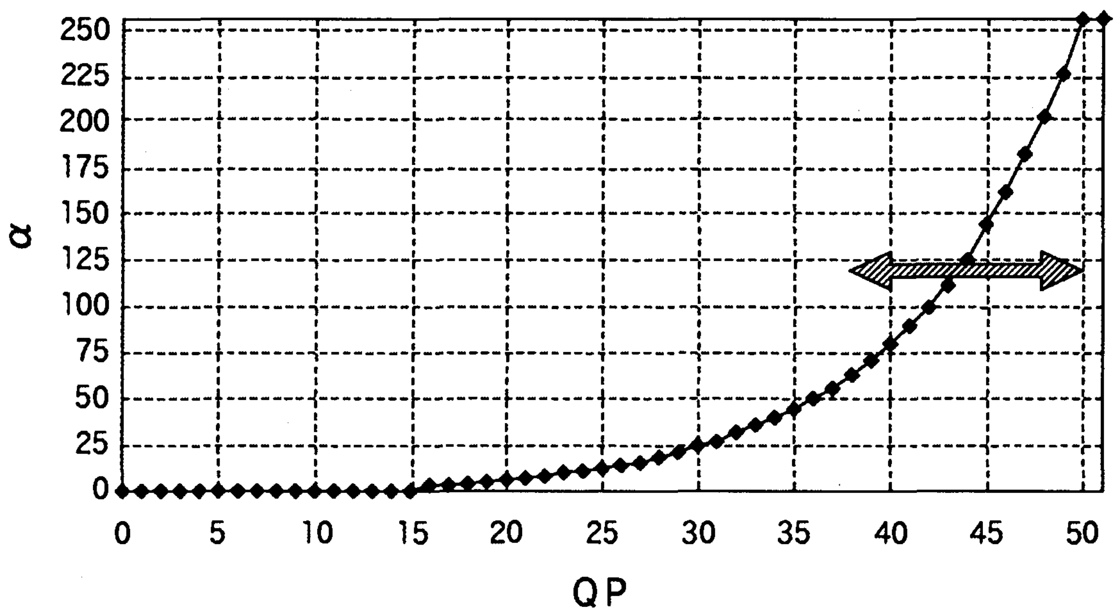

FIG.5

| | indexA (for α) or indexB (for β) | | | | | | | | | | | | | | | | | | | | | | | | | |
|---|---|---|---|---|---|---|---|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
| α | 0 | 0 | 0 | 0 | 0 | 0 | 0 | 0 | 0 | 0 | 0 | 0 | 0 | 0 | 0 | 0 | 4 | 4 | 5 | 6 | 7 | 8 | 9 | 10 | 12 | 13 |
| β | 0 | 0 | 0 | 0 | 0 | 0 | 0 | 0 | 0 | 0 | 0 | 0 | 0 | 0 | 0 | 0 | 2 | 2 | 2 | 3 | 3 | 3 | 3 | 4 | 4 | 4 |

A

| | indexA (for α) or indexB (for β) | | | | | | | | | | | | | | | | | | | | | | | | | |
|---|---|---|---|---|---|---|---|---|---|---|---|---|---|---|---|---|---|---|---|---|---|---|---|---|---|---|
| | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 |
| α | 15 | 17 | 20 | 22 | 25 | 28 | 32 | 36 | 40 | 45 | 50 | 56 | 63 | 71 | 80 | 90 | 101 | 113 | 127 | 144 | 162 | 182 | 203 | 226 | 255 | 255 |
| β | 6 | 6 | 7 | 7 | 8 | 8 | 9 | 9 | 10 | 10 | 11 | 11 | 12 | 12 | 13 | 13 | 14 | 14 | 15 | 15 | 16 | 16 | 17 | 17 | 18 | 18 |

B

FIG.6

| | indexA | | | | | | | | | | | | | | | | | | | | | | | | | |
|---|---|---|---|---|---|---|---|---|---|---|---|---|---|---|---|---|---|---|---|---|---|---|---|---|---|---|
| | 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 |
| bs=1 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 1 | 1 |
| bs=2 | 0 | 0 | 0 | 0 | 0 | 0 | 0 | 0 | 0 | 0 | 0 | 0 | 0 | 0 | 0 | 0 | 0 | 0 | 0 | 0 | 0 | 1 | 1 | 1 | 1 | 1 |
| bs=3 | 0 | 0 | 0 | 0 | 0 | 0 | 0 | 0 | 0 | 0 | 0 | 0 | 0 | 0 | 0 | 0 | 0 | 1 | 1 | 1 | 1 | 1 | 1 | 1 | 1 | 1 |

A

| | indexA | | | | | | | | | | | | | | | | | | | | | | | | | |
|---|---|---|---|---|---|---|---|---|---|---|---|---|---|---|---|---|---|---|---|---|---|---|---|---|---|---|
| | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 | 49 | 50 | 51 |
| bs=1 | 1 | 1 | 1 | 1 | 1 | 1 | 1 | 2 | 2 | 2 | 2 | 3 | 3 | 3 | 4 | 4 | 4 | 5 | 6 | 6 | 7 | 8 | 9 | 10 | 11 | 13 |
| bs=2 | 1 | 1 | 1 | 1 | 1 | 2 | 2 | 2 | 2 | 3 | 3 | 3 | 4 | 4 | 5 | 5 | 6 | 7 | 8 | 8 | 10 | 11 | 12 | 13 | 15 | 17 |
| bs=3 | 1 | 2 | 2 | 2 | 2 | 3 | 3 | 3 | 4 | 4 | 4 | 5 | 6 | 6 | 7 | 8 | 9 | 10 | 11 | 13 | 14 | 16 | 18 | 20 | 23 | 25 |

B

FIG.7

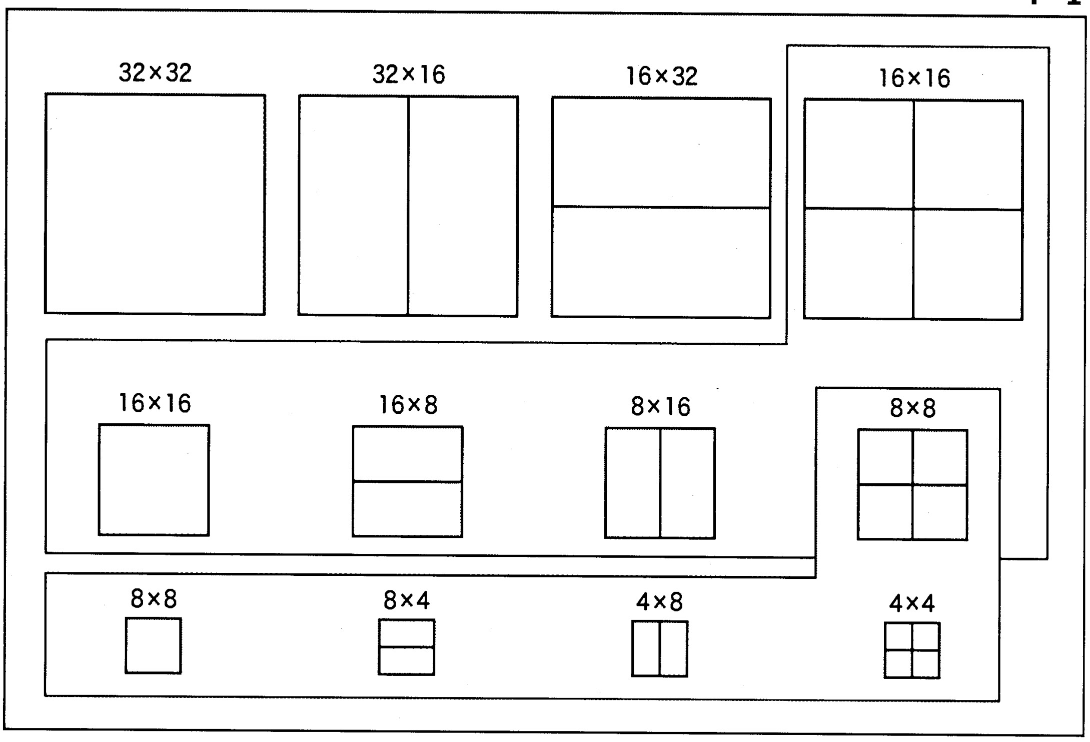

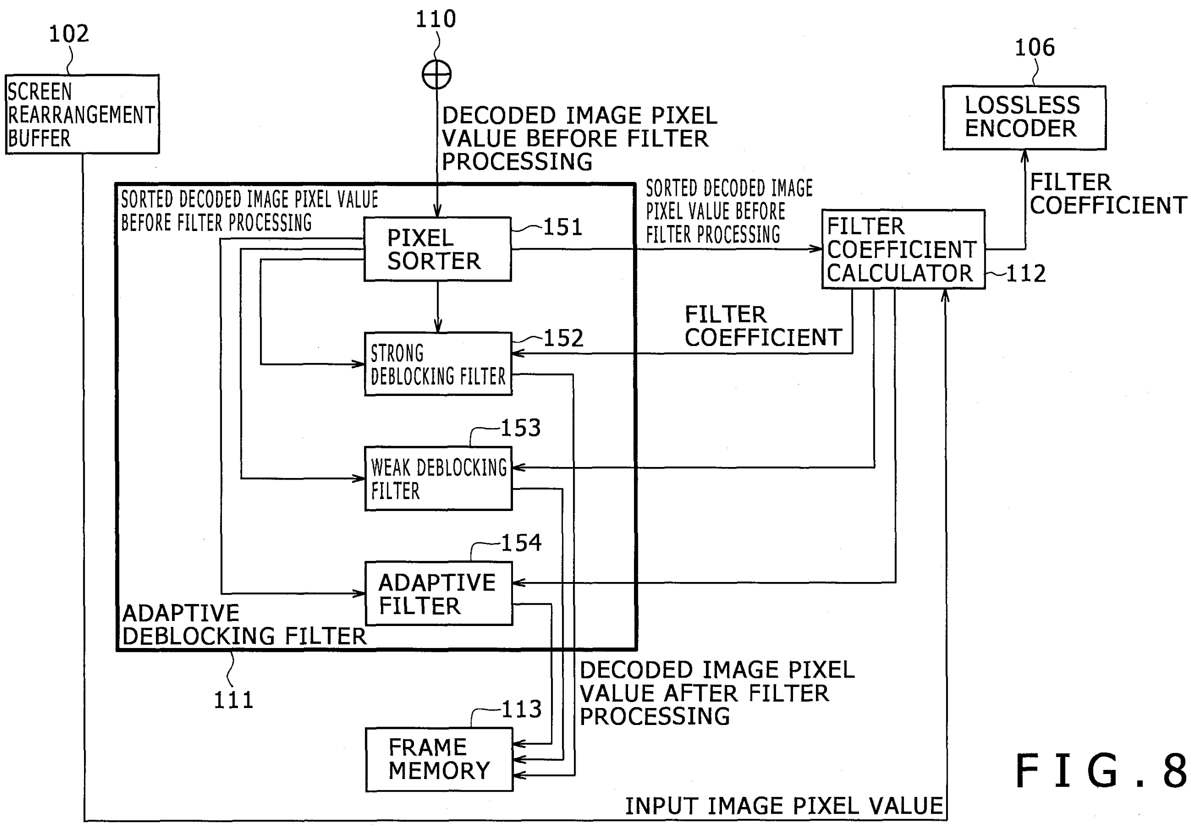
102
SCREEN REARRANGEMENT BUFFER
110
DECODED IMAGE PIXEL VALUE BEFORE FILTER PROCESSING
106
LOSSLESS ENCODER
FILTER COEFFICIENT
SORTED DECODED IMAGE PIXEL VALUE BEFORE FILTER PROCESSING
PIXEL SORTER
151
SORTED DECODED IMAGE PIXEL VALUE BEFORE FILTER PROCESSING
FILTER COEFFICIENT CALCULATOR
112
FILTER COEFFICIENT
STRONG DEBLOCKING FILTER
152
153
WEAK DEBLOCKING FILTER
154
ADAPTIVE FILTER
ADAPTIVE DEBLOCKING FILTER
111
DECODED IMAGE PIXEL VALUE AFTER FILTER PROCESSING
113
FRAME MEMORY
INPUT IMAGE PIXEL VALUE

FIG.8

FIG.9

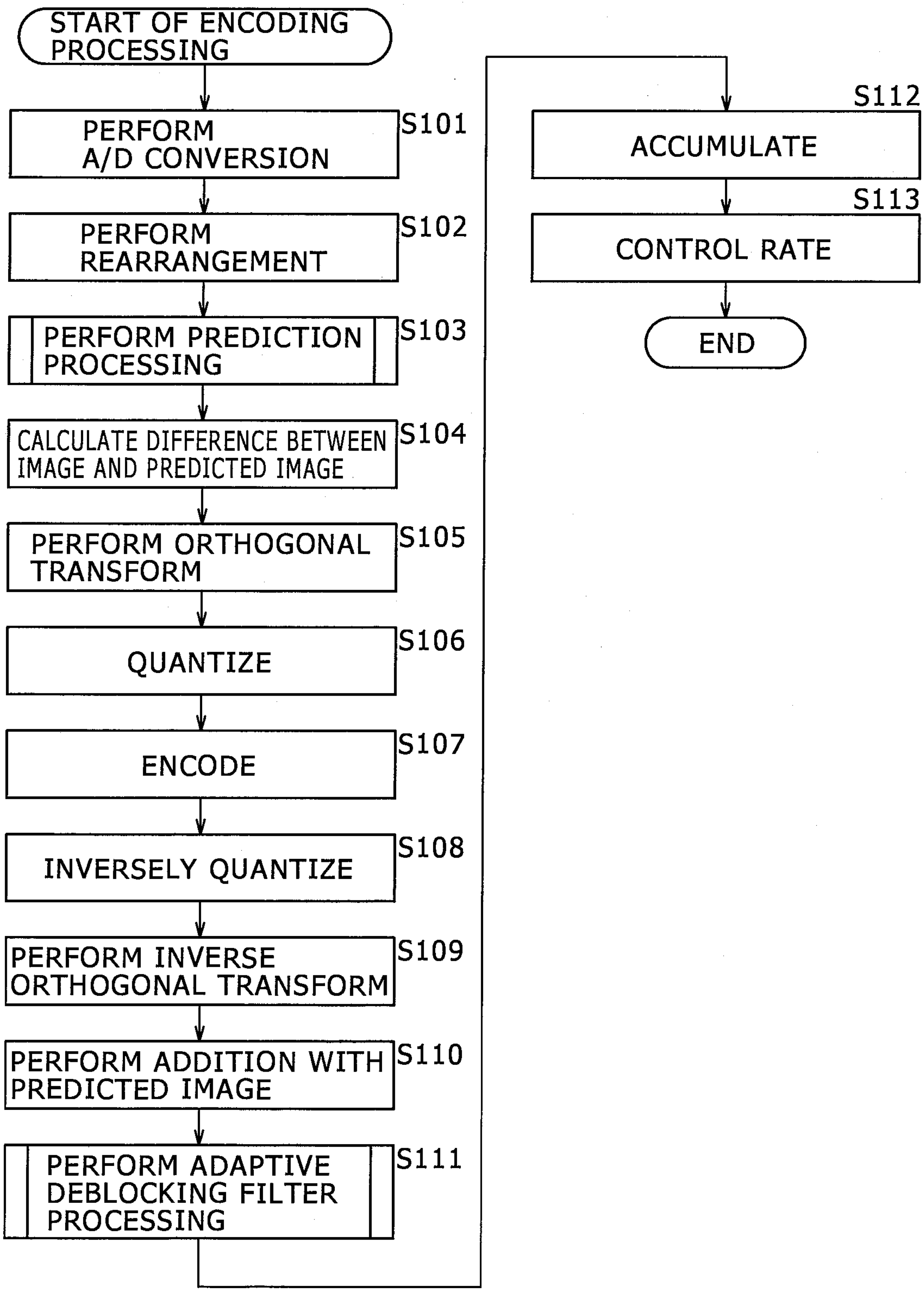
START OF ENCODING PROCESSING
PERFORM A/D CONVERSION
S101
PERFORM REARRANGEMENT
S102
PERFORM PREDICTION PROCESSING
S103
CALCULATE DIFFERENCE BETWEEN IMAGE AND PREDICTED IMAGE
S104
PERFORM ORTHOGONAL TRANSFORM
S105
QUANTIZE
S106
ENCODE
S107
INVERSELY QUANTIZE
S108
PERFORM INVERSE ORTHOGONAL TRANSFORM
S109
PERFORM ADDITION WITH PREDICTED IMAGE
S110
PERFORM ADAPTIVE DEBLOCKING FILTER PROCESSING
S111
ACCUMULATE
S112
CONTROL RATE
S113
END

FIG.10

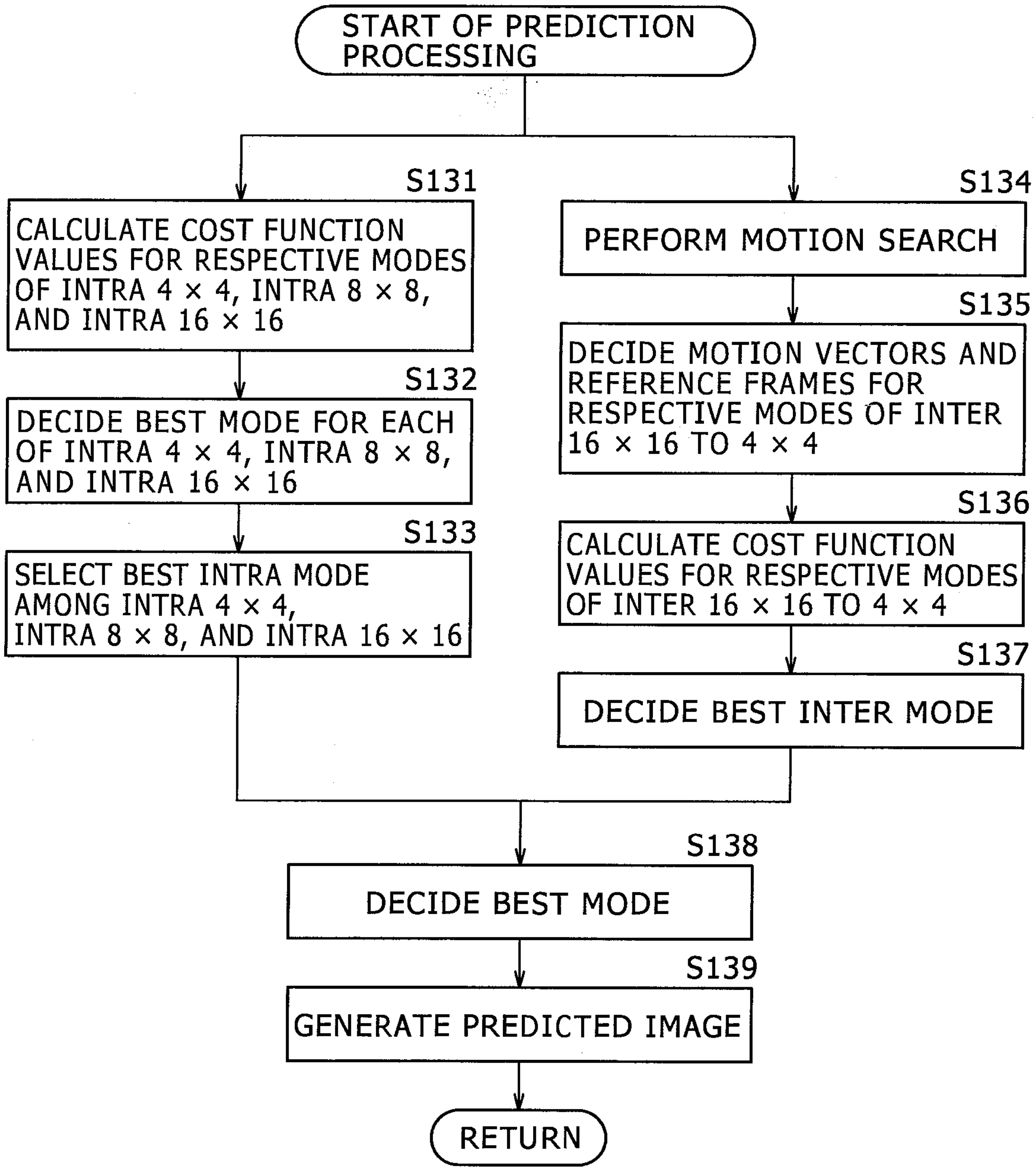
START OF PREDICTION PROCESSING
S131
CALCULATE COST FUNCTION VALUES FOR RESPECTIVE MODES OF INTRA 4 × 4, INTRA 8 × 8, AND INTRA 16 × 16
S132
DECIDE BEST MODE FOR EACH OF INTRA 4 × 4, INTRA 8 × 8, AND INTRA 16 × 16
S133
SELECT BEST INTRA MODE AMONG INTRA 4 × 4, INTRA 8 × 8, AND INTRA 16 × 16
S134
PERFORM MOTION SEARCH
S135
DECIDE MOTION VECTORS AND REFERENCE FRAMES FOR RESPECTIVE MODES OF INTER 16 × 16 TO 4 × 4
S136
CALCULATE COST FUNCTION VALUES FOR RESPECTIVE MODES OF INTER 16 × 16 TO 4 × 4
S137
DECIDE BEST INTER MODE
S138
DECIDE BEST MODE
S139
GENERATE PREDICTED IMAGE
RETURN

FIG.11

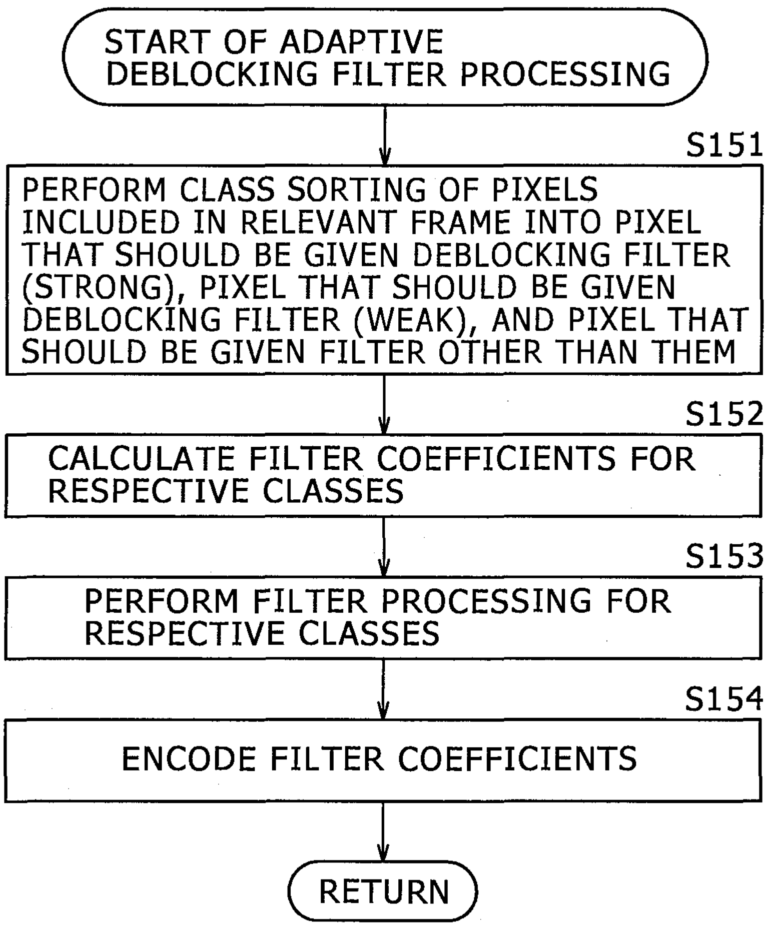
START OF ADAPTIVE DEBLOCKING FILTER PROCESSING
S151
PERFORM CLASS SORTING OF PIXELS INCLUDED IN RELEVANT FRAME INTO PIXEL THAT SHOULD BE GIVEN DEBLOCKING FILTER (STRONG), PIXEL THAT SHOULD BE GIVEN DEBLOCKING FILTER (WEAK), AND PIXEL THAT SHOULD BE GIVEN FILTER OTHER THAN THEM
S152
CALCULATE FILTER COEFFICIENTS FOR RESPECTIVE CLASSES
S153
PERFORM FILTER PROCESSING FOR RESPECTIVE CLASSES
S154
ENCODE FILTER COEFFICIENTS
RETURN

FIG.12

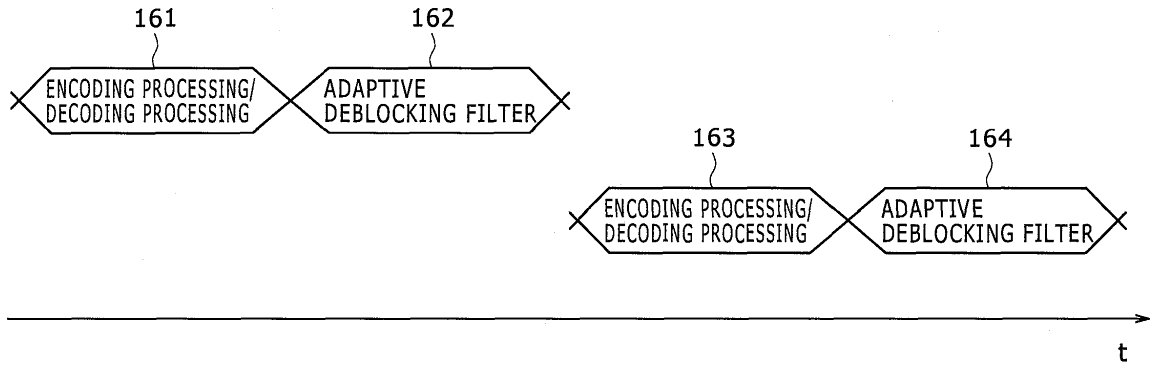
161
162
ENCODING PROCESSING/
DECODING PROCESSING
ADAPTIVE
DEBLOCKING FILTER
163
164
ENCODING PROCESSING/
DECODING PROCESSING
ADAPTIVE
DEBLOCKING FILTER
t

FIG.13

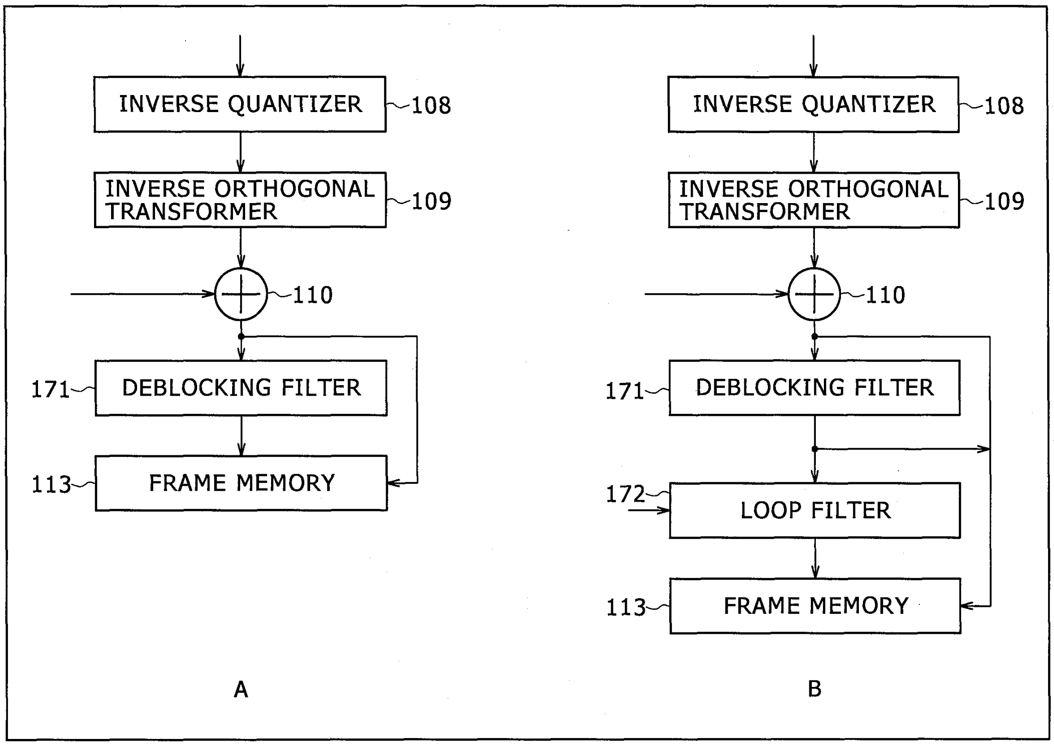
INVERSE QUANTIZER
108
INVERSE ORTHOGONAL TRANSFORMER
109
110
171
DEBLOCKING FILTER
113
FRAME MEMORY
A
INVERSE QUANTIZER
108
INVERSE ORTHOGONAL TRANSFORMER
109
110
171
DEBLOCKING FILTER
172
LOOP FILTER
113
FRAME MEMORY
B

FIG.14

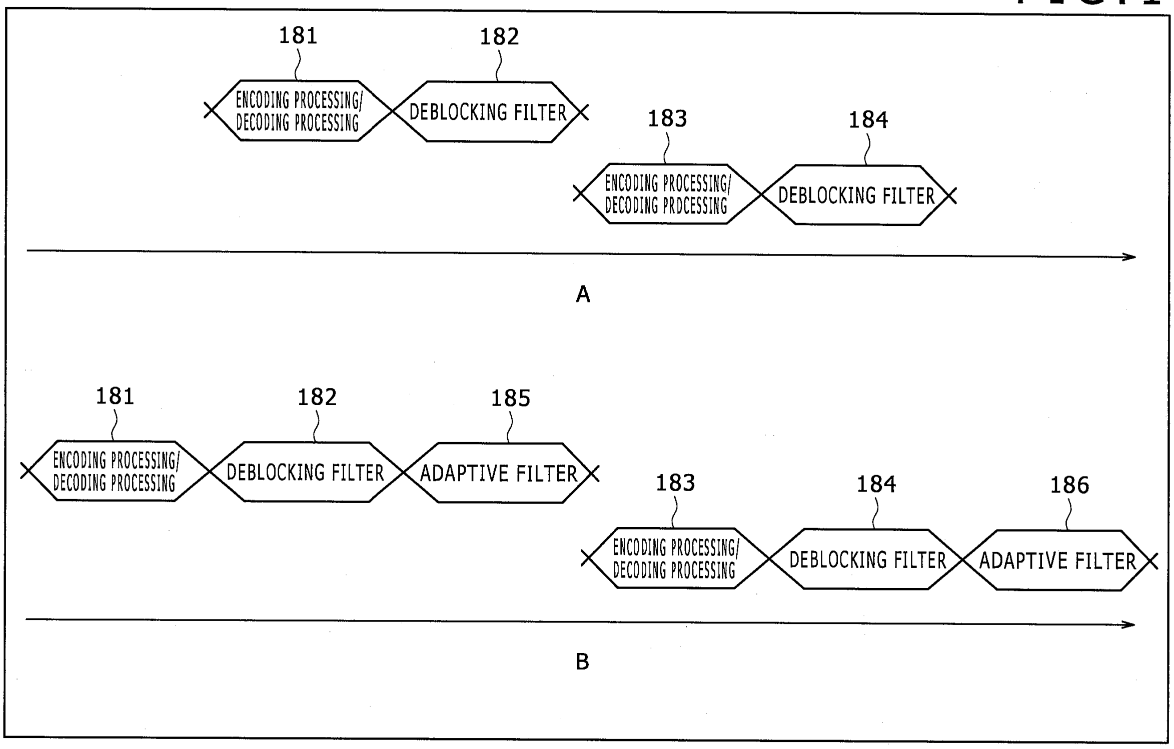
181
182
ENCODING PROCESSING/ DECODING PROCESSING
DEBLOCKING FILTER
183
184
ENCODING PROCESSING/ DECODING PROCESSING
DEBLOCKING FILTER
A
181
182
185
ENCODING PROCESSING/ DECODING PROCESSING
DEBLOCKING FILTER
ADAPTIVE FILTER
183
184
186
ENCODING PROCESSING/ DECODING PROCESSING
DEBLOCKING FILTER
ADAPTIVE FILTER
B

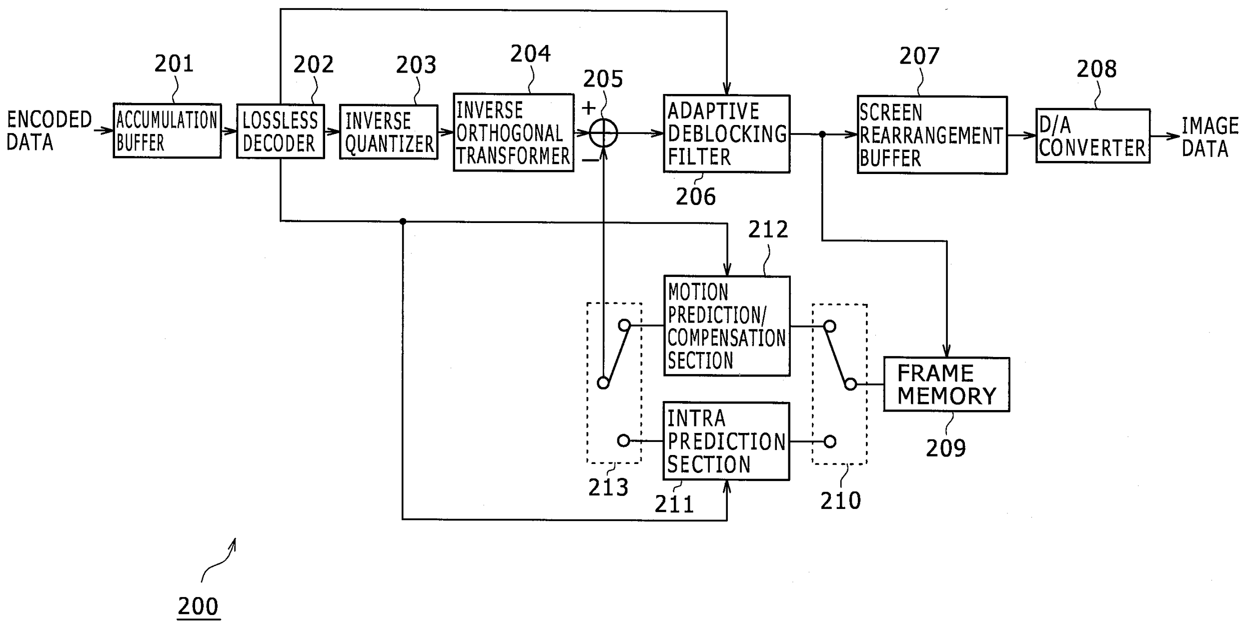
ENCODED DATA
ACCUMULATION BUFFER
LOSSLESS DECODER
INVERSE QUANTIZER
INVERSE ORTHOGONAL TRANSFORMER
ADAPTIVE DEBLOCKING FILTER
SCREEN REARRANGEMENT BUFFER
D/A CONVERTER
IMAGE DATA
MOTION PREDICTION/ COMPENSATION SECTION
INTRA PREDICTION SECTION
FRAME MEMORY
+
−
201
202
203
204
205
206
207
208
209
210
211
212
213
200

FIG.15

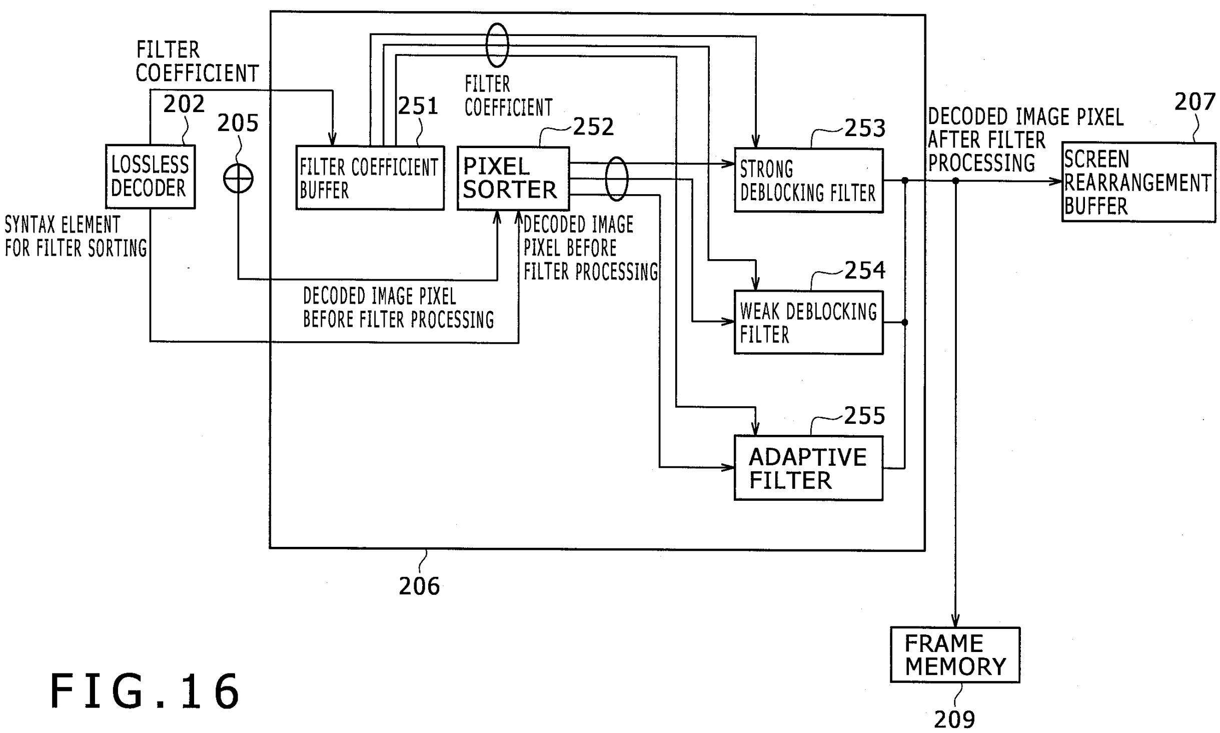
FILTER COEFFICIENT
202
205
251
FILTER COEFFICIENT
252
253
DECODED IMAGE PIXEL AFTER FILTER PROCESSING
207
LOSSLESS DECODER
FILTER COEFFICIENT BUFFER
PIXEL SORTER
STRONG DEBLOCKING FILTER
SCREEN REARRANGEMENT BUFFER
SYNTAX ELEMENT FOR FILTER SORTING
DECODED IMAGE PIXEL BEFORE FILTER PROCESSING
254
WEAK DEBLOCKING FILTER
DECODED IMAGE PIXEL BEFORE FILTER PROCESSING
255
ADAPTIVE FILTER
206
FRAME MEMORY
209

FIG.16

FIG.17

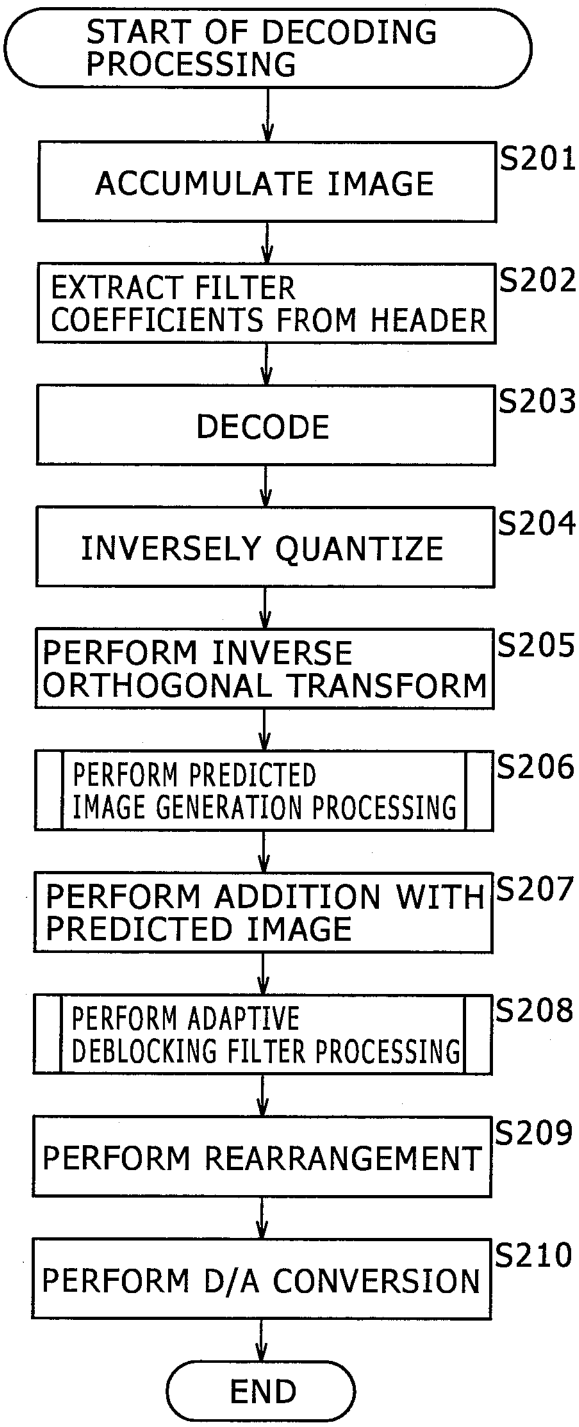
START OF DECODING PROCESSING
ACCUMULATE IMAGE
S201
EXTRACT FILTER COEFFICIENTS FROM HEADER
S202
DECODE
S203
INVERSELY QUANTIZE
S204
PERFORM INVERSE ORTHOGONAL TRANSFORM
S205
PERFORM PREDICTED IMAGE GENERATION PROCESSING
S206
PERFORM ADDITION WITH PREDICTED IMAGE
S207
PERFORM ADAPTIVE DEBLOCKING FILTER PROCESSING
S208
PERFORM REARRANGEMENT
S209
PERFORM D/A CONVERSION
S210
END

FIG.18

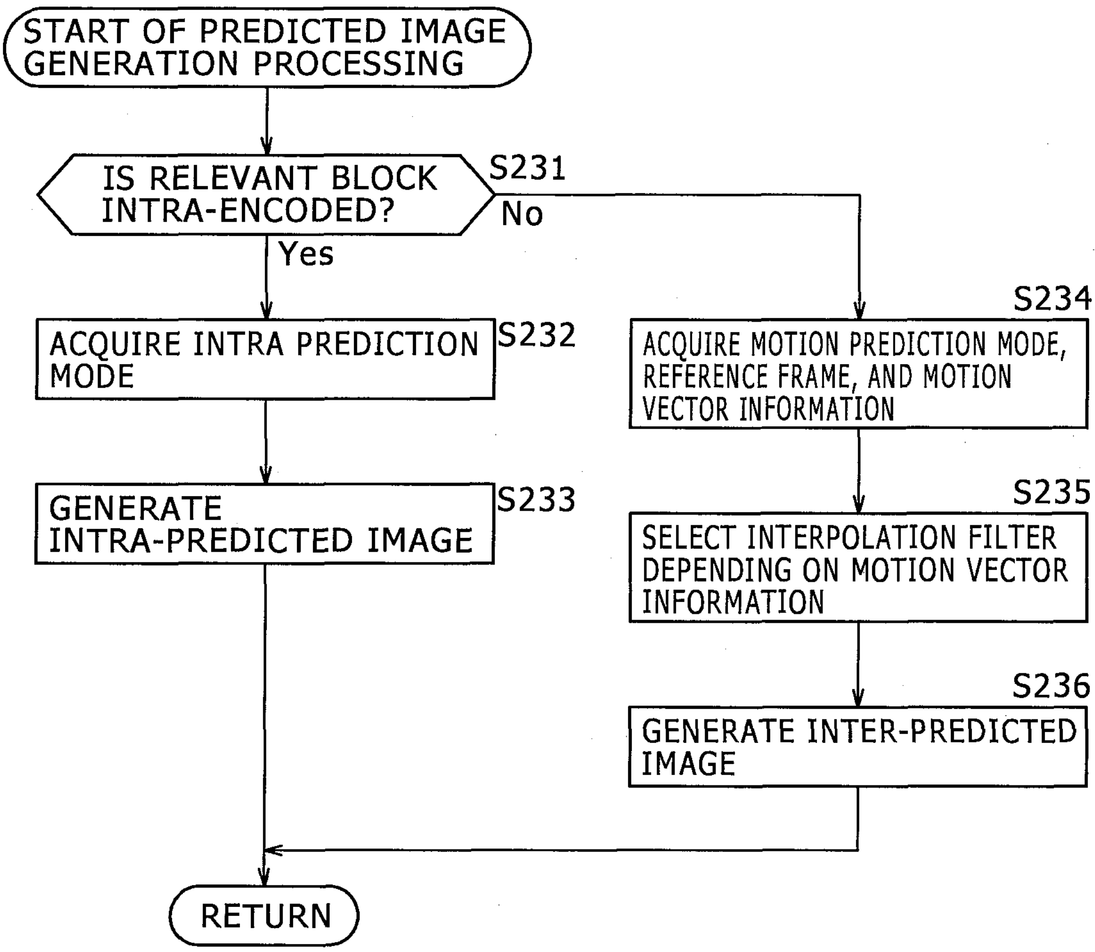
START OF PREDICTED IMAGE GENERATION PROCESSING
IS RELEVANT BLOCK INTRA-ENCODED?
S231
No
Yes
ACQUIRE INTRA PREDICTION MODE
S232
GENERATE INTRA-PREDICTED IMAGE
S233
S234
ACQUIRE MOTION PREDICTION MODE, REFERENCE FRAME, AND MOTION VECTOR INFORMATION
S235
SELECT INTERPOLATION FILTER DEPENDING ON MOTION VECTOR INFORMATION
S236
GENERATE INTER-PREDICTED IMAGE
RETURN

FIG.19

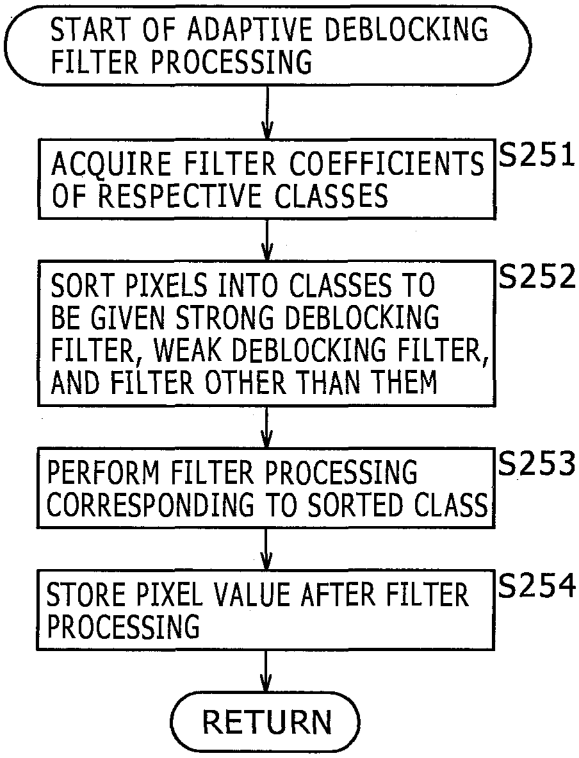
START OF ADAPTIVE DEBLOCKING FILTER PROCESSING
ACQUIRE FILTER COEFFICIENTS OF RESPECTIVE CLASSES
S251
SORT PIXELS INTO CLASSES TO BE GIVEN STRONG DEBLOCKING FILTER, WEAK DEBLOCKING FILTER, AND FILTER OTHER THAN THEM
S252
PERFORM FILTER PROCESSING CORRESPONDING TO SORTED CLASS
S253
STORE PIXEL VALUE AFTER FILTER PROCESSING
S254
RETURN

FIG.20

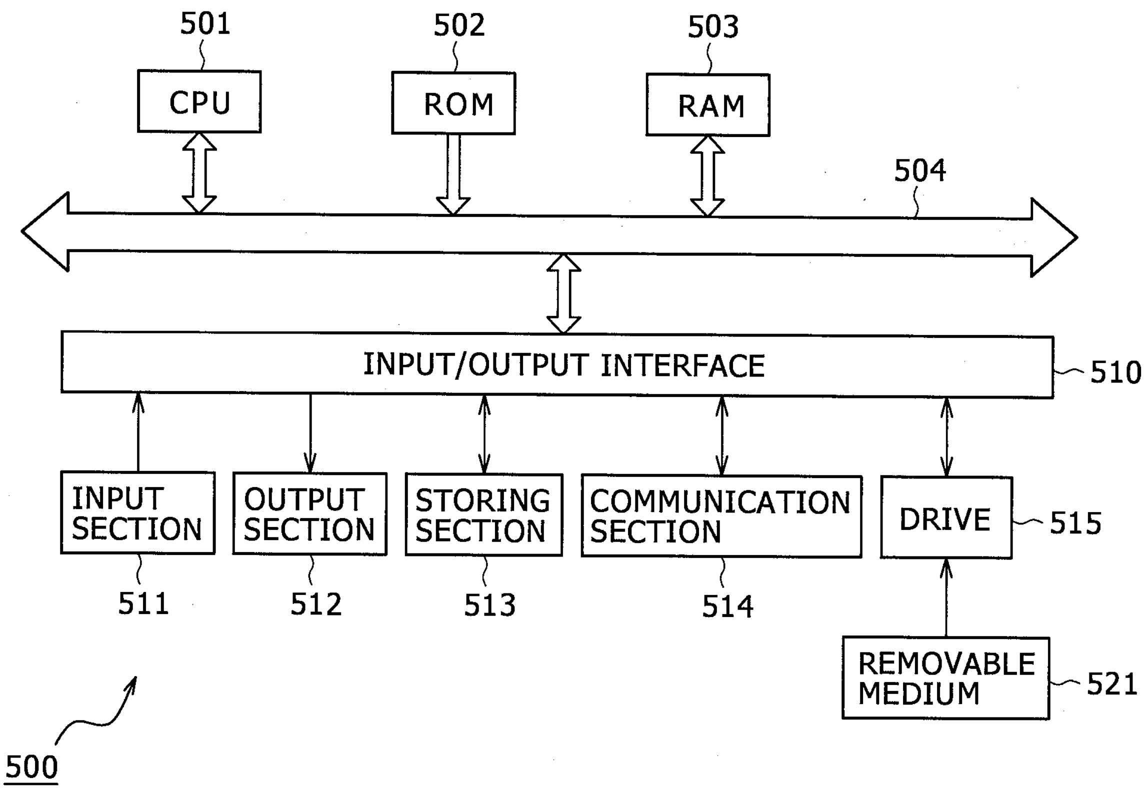
501
CPU
502
ROM
503
RAM
504
INPUT/OUTPUT INTERFACE
510
INPUT SECTION
OUTPUT SECTION
STORING SECTION
COMMUNICATION SECTION
DRIVE
515
511
512
513
514
REMOVABLE MEDIUM
521
500

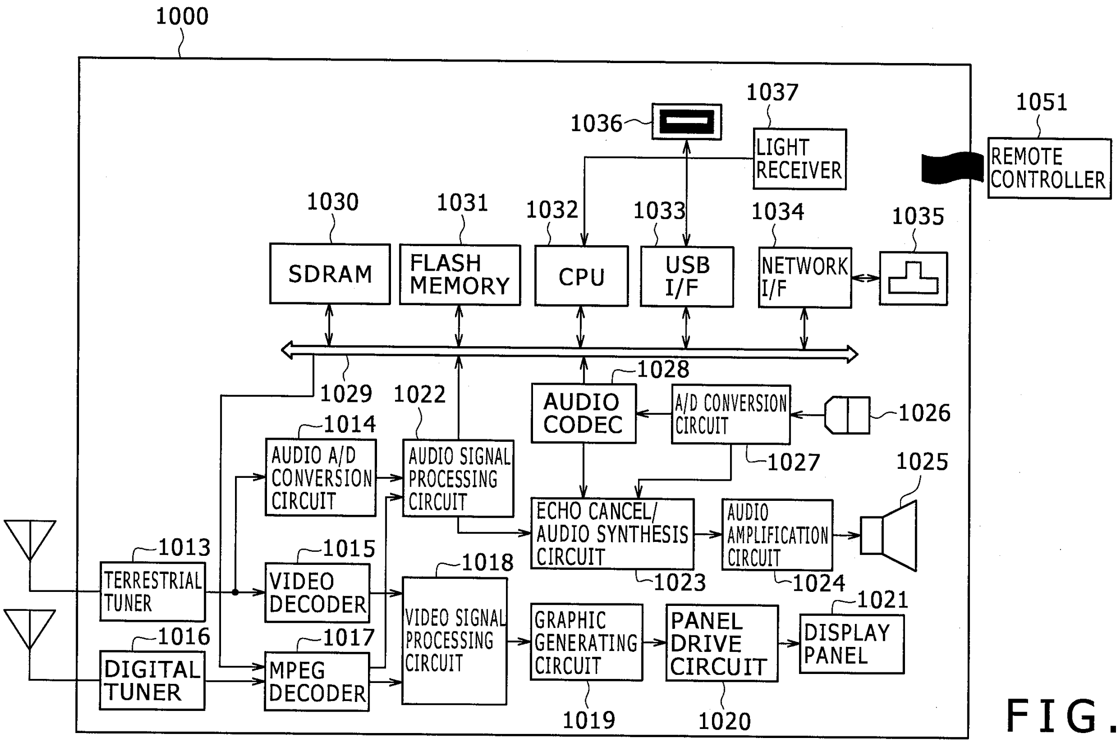
1000
1036
1037
LIGHT RECEIVER
1051
REMOTE CONTROLLER
1030
SDRAM
1031
FLASH MEMORY
1032
CPU
1033
USB I/F
1034
NETWORK I/F
1035
1028
1029
1022
AUDIO CODEC
A/D CONVERSION CIRCUIT
1026
1014
AUDIO A/D CONVERSION CIRCUIT
AUDIO SIGNAL PROCESSING CIRCUIT
1027
1025
ECHO CANCEL/ AUDIO SYNTHESIS CIRCUIT
AUDIO AMPLIFICATION CIRCUIT
1013
TERRESTRIAL TUNER
1015
VIDEO DECODER
1018
VIDEO SIGNAL PROCESSING CIRCUIT
1023
1024
1021
GRAPHIC GENERATING CIRCUIT
PANEL DRIVE CIRCUIT
DISPLAY PANEL
1016
DIGITAL TUNER
1017
MPEG DECODER
1019
1020

FIG.21

FIG.22

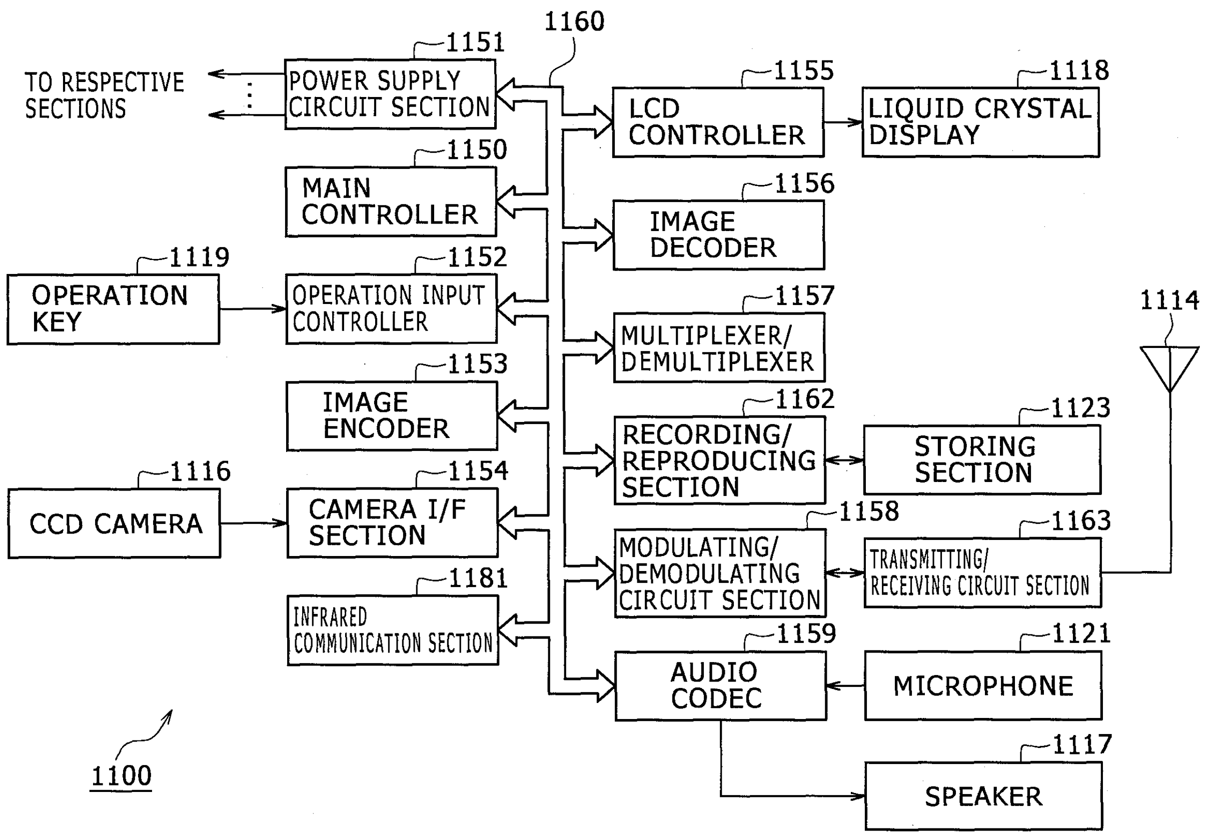
1160
1151
TO RESPECTIVE SECTIONS
POWER SUPPLY CIRCUIT SECTION
1150
MAIN CONTROLLER
1119
OPERATION KEY
1152
OPERATION INPUT CONTROLLER
1153
IMAGE ENCODER
1116
CCD CAMERA
1154
CAMERA I/F SECTION
1181
INFRARED COMMUNICATION SECTION
1155
LCD CONTROLLER
1118
LIQUID CRYSTAL DISPLAY
1156
IMAGE DECODER
1157
MULTIPLEXER/ DEMULTIPLEXER
1114
1162
RECORDING/ REPRODUCING SECTION
1123
STORING SECTION
1158
MODULATING/ DEMODULATING CIRCUIT SECTION
1163
TRANSMITTING/ RECEIVING CIRCUIT SECTION
1159
AUDIO CODEC
1121
MICROPHONE
1117
SPEAKER
1100

FIG.23

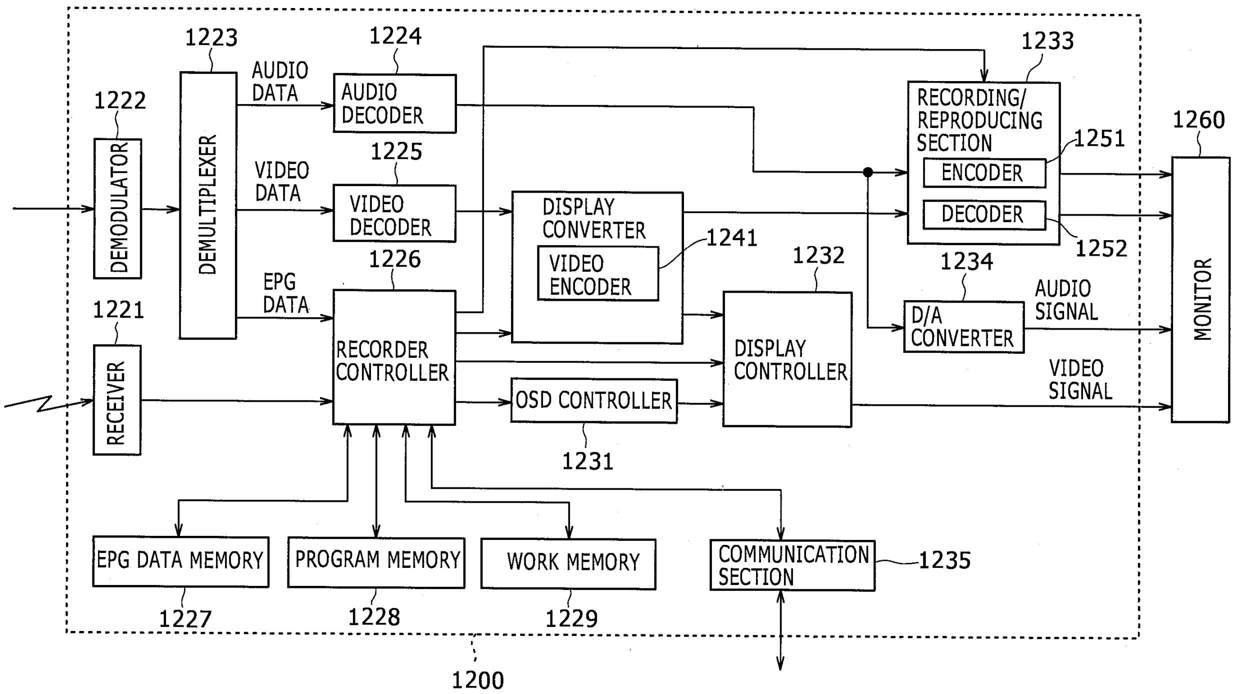
1222
DEMODULATOR
1223
DEMULTIPLEXER
AUDIO DATA
VIDEO DATA
EPG DATA
1224
AUDIO DECODER
1225
VIDEO DECODER
1226
RECORDER CONTROLLER
1221
RECEIVER
DISPLAY CONVERTER
VIDEO ENCODER
1241
1232
DISPLAY CONTROLLER
OSD CONTROLLER
1231
1233
RECORDING/ REPRODUCING SECTION
ENCODER
DECODER
1251
1252
1234
D/A CONVERTER
AUDIO SIGNAL
VIDEO SIGNAL
1260
MONITOR
EPG DATA MEMORY
1227
PROGRAM MEMORY
1228
WORK MEMORY
1229
COMMUNICATION SECTION
1235
1200

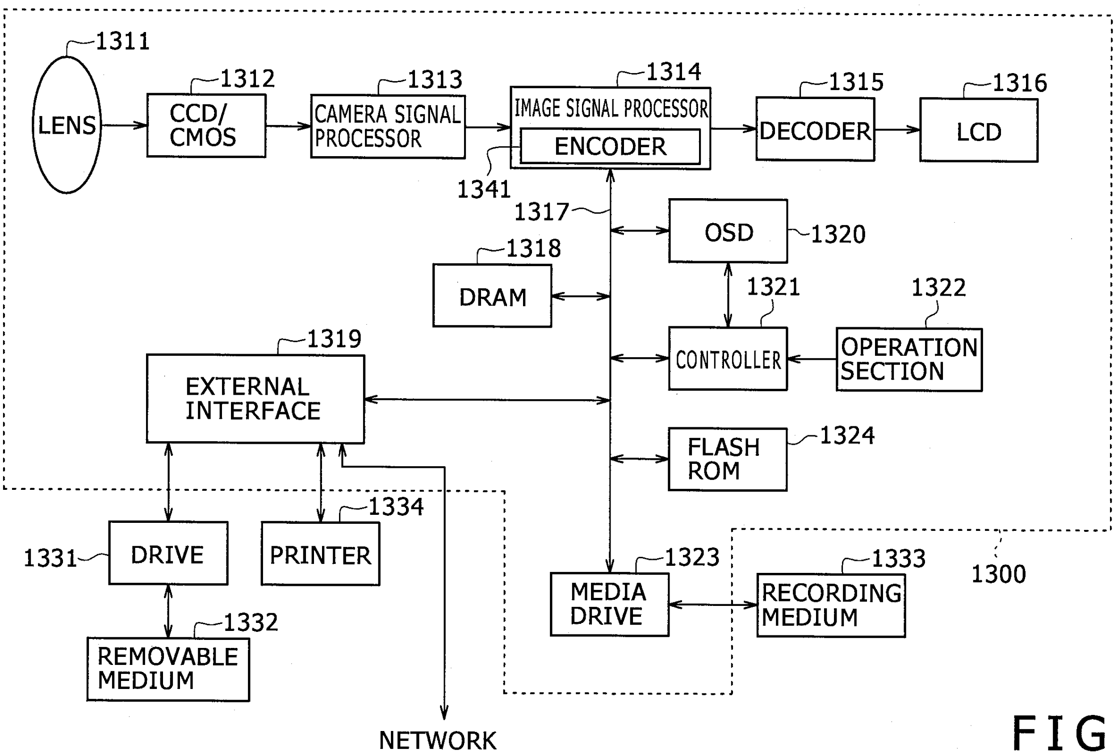
1311
LENS
1312
CCD/ CMOS
1313
CAMERA SIGNAL PROCESSOR
1314
IMAGE SIGNAL PROCESSOR
ENCODER
1341
1315
DECODER
1316
LCD
1317
OSD
1320
1318
DRAM
1321
1322
CONTROLLER
OPERATION SECTION
1319
EXTERNAL INTERFACE
FLASH ROM
1324
1334
1331
DRIVE
PRINTER
1323
MEDIA DRIVE
1333
RECORDING MEDIUM
1300
1332
REMOVABLE MEDIUM
NETWORK

FIG.24

**INTERNATIONAL SEARCH REPORT**

International application No.
PCT/JP2010/072736

A. CLASSIFICATION OF SUBJECT MATTER
*H04N7/26*(2006.01)i

According to International Patent Classification (IPC) or to both national classification and IPC

B. FIELDS SEARCHED

Minimum documentation searched (classification system followed by classification symbols)
H04N7/24-7/68

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>A | WO 2008/075247 A1 (KONINKLIJKE PHILIPS ELECTRONICS N.V.),<br>26 June 2008 (26.06.2008),<br>pages 25 to 34<br>& JP 2010-514246 A & US 2010/0027686 A1<br>& CN 101563926 A & KR 10-2009-0100402 A | 1-5,7-10<br>6 |
| X | WO 2008/084745 A1 (Matsushita Electric Industrial Co., Ltd.),<br>17 July 2008 (17.07.2008),<br>paragraphs [0046] to [0125]<br>& US 2010/0021071 A1 & EP 1944974 A1 | 1-2,4-5,7-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 23 February, 2011 (23.02.11) | 08 March, 2011 (08.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2010/072736

C (Continuation). DOCUMENTS CONSIDERED TO BE RELEVANT

| Category* | Citation of document, with indication, where appropriate, of the relevant passages | Relevant to claim No. |
|---|---|---|
| A | WO 2006/010276 A1 (ALGOLITH INC.), 02 February 2006 (02.02.2006), entire text; all drawings & JP 2008-508751 A & US 2006/0050783 A1 & CA 2616875 A | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **YI-JEN CHIU ; L. XU.** Adaptive (Wiener) Filter for Video Compression. *ITU-T SG16 Contribution, C437, Geneva,* April 2008
- **TAKESHI. CHUJOH et al.** Block-based Adaptive Loop Filter. *ITU-T SG16 Q6 VCEG Contribution, A118, Germany,* July 2008
- Video Coding Using Extended Block Sizes. ITU-T SG16 Contribution, C123, English. Qualcomm Inc, January 2009